(19) Europäisches Patentamt / European Patent Office / Office européen des brevets

(11) **EP 3 455 910 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **17722739.4**

(22) Anmeldetag: **09.05.2017**

(51) Internationale Patentklassifikation (IPC):
*H01S 3/06* (2006.01)     *H01S 3/08* (2023.01)
*H01S 3/094* (2006.01)     *H01S 3/07* (2006.01)
*H01S 3/23* (2006.01)

(52) Gemeinsame Patentklassifikation (CPC):
**H01S 3/094084; H01S 3/0604; H01S 3/0617;
H01S 3/0621; H01S 3/0623; H01S 3/0625;
H01S 3/08095; H01S 3/2325;** H01S 3/07

(86) Internationale Anmeldenummer:
**PCT/EP2017/060970**

(87) Internationale Veröffentlichungsnummer:
**WO 2017/194489 (16.11.2017 Gazette 2017/46)**

(54) **FESTKÖRPER, LASERVERSTÄRKUNGSSYSTEM UND FESTKÖRPERLASER**

SOLID BODY, LASER AMPLIFICATION SYSTEM AND SOLID-STATE LASER

CORPS SOLIDE, SYSTÈME D'AMPLIFICATION LASER ET LASER À CORPS SOLIDE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.05.2016 DE 102016108474**

(43) Veröffentlichungstag der Anmeldung:
**20.03.2019 Patentblatt 2019/12**

(73) Patentinhaber: **Deutsches Zentrum für Luft- und
Raumfahrt e.V.
51147 Köln (DE)**

(72) Erfinder: **LORBEER, Raoul-Amadeus
71106 Magstadt (DE)**

(74) Vertreter: **Hoeger, Stellrecht & Partner
Patentanwälte mbB
Uhlandstrasse 14c
70182 Stuttgart (DE)**

(56) Entgegenhaltungen:
US-A- 5 553 088     US-A1- 2002 057 725
US-A1- 2006 114 961     US-A1- 2006 193 362
US-B1- 8 514 906

## Beschreibung

Die vorliegende Erfindung betrifft einen scheiben- oder quaderförmigen, mindestens ein laseraktives Material enthaltenden Festkörper für ein Laserverstärkungssytem.

Ferner betrifft die vorliegende Erfindung ein Laserverstärkungssystem umfassend mindestens einen scheiben- oder quaderförmigen Festkörper.

Außerdem betrifft die vorliegende Erfindung einen Festkörperlaser umfassend ein Laserverstärkungssystem.

Festkörper der eingangs beschriebenen Art, die als flach eingestuft werden können und die insbesondere bei Scheibenlasern und Scheibenverstärkern zum Einsatz kommen, besitzen einige technische Vorzüge gegenüber der Nutzung eines dreidimensional ausgedehnten Mediums. Insbesondere ist hier das Wärmemanagement zu erwähnen.

Die Länge beziehungsweise Dicke eines solchen flachen laseraktiven Mediums, das der scheiben- oder quaderförmige Festkörper bildet, ist jedoch nicht ausreichend, um eine volle Konversion der im Festkörper gespeicherten Energie in einen Laserstrahl in einem einzigen Strahldurchgang durch den für den Laserstrahl optisch teildurchlässigen Festkörper zu gewährleisten. Dies gilt entsprechend auch für einen Pumplaserstrahl beziehungsweise ein Pumplaserstrahlungsfeld zur Anregung des laseraktiven Materials im Festkörper. Um ein praxistaugliches effizientes System bereitzustellen, ist es daher erforderlich, eine optische Strecke im laseraktiven Medium mit zusätzlichen Hilfsmitteln zu verlängern.

Eine Möglichkeit hierbei ist es, eine hohe Anzahl von Durchgängen eines Strahlungsfelds im Festkörper eines Scheibenlasers über die Güte des Resonators des Lasers zu erzielen. Dabei wird das Pumplaserstrahlungsfeld mittels einer Spiegelanordnung mehrfach auf den Festkörper zurückreflektiert, um eine genügend hohe Absorption zu gewährleisten.

Bei Laserverstärkungssystemen, die mit einem scheiben- oder quaderförmigen, mindestens ein laseraktives Material enthaltenden Festkörper arbeiten, wird das beschriebene Prinzip, mit dem das Pumpstrahlungsfeld mehrfach auf den Festkörper zurückreflektiert wird, auf den bereits verstärkten Laserstrahl beziehungsweise das Laserstrahlungsfeld übertragen, um eine ausreichend hohe Verstärkung zu erreichen. Wiederum bildet eine Spiegelanordnung das Laserstrahlungsfeld mehrfach auf den scheiben- oder quaderförmigen Festkörper ab, um bei jeder weiteren Abbildung und bei jedem weiteren Durchlauf durch den Festkörper eine erneute Verstärkung zu erzielen. Auch hier muss ein hoher Aufwand in Verbindung mit dem Aufbau der Spiegelanordnung betrieben werden. Diese benötigt zudem ein nicht vernachlässigbares Raumvolumen und weist ein ebenfalls nicht vernachlässigbares Gewicht auf, welches insbesondere für Anwendungen im Weltraum nachteilig ist.

Laserverstärkungssysteme umfassend mindestens einen scheiben- oder quaderförmigen Festkörper sind beispielsweise aus der DE 43 44 227 A1 sowie der DE 198 35 107 A1 bekannt.

Um eine Wechselwirkungslänge für das den Festkörper durchlaufende Strahlungsfeld zu erhöhen, sind sogenannte Slab-Laser beziehungsweise Slab-Verstärker bekannt, bei denen das Strahlungsfeld durch eine schmale, quer zur Ober- oder Unterseite, insbesondere senkrecht zu einer von diesen verlaufende Kante in den Festkörper zum Anregen des laseraktiven Materials eingekoppelt wird. Allerdings muss bei einer solchen seitlichen Einkopplung das Strahlungsfeld relativ stark fokussiert werden.

In der US 2002/0057725 A1 ist ein Laser mit einem Verstärkungsmedium beschrieben, welches ausgebildet ist, um eine integrierte optische Pumpkavität bereitzustellen. Bei dem beschriebenen Verstärkungsmedium sind optische Einkoppelöffnungen ausgebildet in Bereichen, wo keine reflektierende Beschichtung vorhanden ist, an welcher die in das Verstärkungsmedium eingekoppelte Strahlung im Inneren desselben hin und her reflektiert wird. Diodengepumpte Laserverstärker sind in der US 2006/0114961 A1 beschrieben. Auch bei diesem Laserverstärker sind bei dem beschriebenen Verstärkungsmedium optische Einkoppelöffnungen in Bereichen ausgebildet, wo keine reflektierende Beschichtung vorhanden ist, an welcher die in das Verstärkungsmedium eingekoppelte Strahlung hin und her reflektiert wird. In der US 2006/0193362 A1 ist eine Vorrichtung zum Führen von Strahlen in einem Laser offenbart. Aus der US 8,514,906 B1 sind Laserverstärkungsmodule bekannt. Laserverstärkungssysteme sind in der US 5,553,088 beschrieben.

Es ist daher eine Aufgabe der vorliegenden Erfindung, einen Festkörper, ein Laserverstärkungssystem und einen Festkörperlaser der eingangs beschriebenen Art so zu verbessern, dass ein optischer Aufbau vereinfacht wird.

Diese Aufgabe wird erfindungsgemäß gelöst durch einen Festkörper mit den Merkmalen des Anspruchs 1.

Mit dem vorgeschlagenen weitergebildeten Festkörper ist es möglich, mehrere Durchläufe eines Strahlungsfeldes, insbesondere eines Seedlaserstrahlungsfeldes und/oder eines Pumplaserstrahlungsfeldes, auf einfache Weise zu erreichen, nämlich durch Mehrfachreflexionen an der ersten reflektierenden Beschichtung und an der zweiten reflektierenden Beschichtung. Das Strahlungsfeld verbleibt also für die mehreren Durchläufe, und zwar mehr als einen Hin- und Rücklauf durch den Festkörper, im Festkörper zwischen dessen Ober- und Unterseite. Das Strahlungsfeld wird also zwischen der reflektierend beschichteten Oberseite und der reflektierend beschichteten Unterseite praktisch eingefangen und mehrfach hin und her reflektiert. Abhängig von dem gewählten Neigungswinkel ist es so insbesondere möglich, bei einem sehr dünnen Festkörper ein Strahlungsfeld mit mehreren Millimetern Durchmesser bei jedem Durchgang nur um einen Bruchteil seines eigenen Durchmessers seitlich zu versetzen, so dass nach jedem Durchgang wieder nahezu dasselbe Volumen des Festkörpers durchquert wird. Unter einer Einkoppelöffnung ist hier insbesondere jede Öffnung zu verstehen, die das Strahlungsfeld durchlässt, also einen Eintritt desselben in den Festkörper ermöglicht. Insbesondere ist hier nicht nur eine räumliche Öffnung zu verstehen, sondern auch eine optische Öffnung, die das Strahlungsfeld unter gewissen Bedingungen in den Festkörper eindringen lässt, beispielsweise für eine bestimmte Wellenlänge oder einen bestimmten Wellenlängenbereich unter einem bestimmten Einfallswinkel oder Einfallswinkelbereich und/oder abhängig von einer Polarisation des Strahlungsfelds. Insbesondere die letztgenannten optionalen Abhängigkeiten ermöglichen es, für die gesamte Oberseite und/oder die gesamte Unterseite selektiv eine Öffnung für ein Strahlungsfeld zu definieren, sodass keine optimale Fokussierung des Strahlungsfelds auf einen bestimmten Bereich des Festkörpers erforderlich ist, beispielsweise eine Einkoppelöffnung, die durch einen nicht beschichteten Flächenbereich der Oberseite oder der Unterseite des Festkörpers gebildet wird, welcher also frei ist von einer reflektierenden Beschichtung. Durch die vorgeschlagene Weiterbildung des Festkörpers können so die aus dem Stand der Technik bekannten umfangreichen, optischen Anordnungen, insbesondere von Spiegeln grundsätzlich vermieden werden. Dies vereinfacht zum einen den Aufbau von Laserverstärkungssystemen, da auf Spiegel verzichtet werden kann, die dann auch nicht justiert werden müssen. Zum anderen werden signifikant Kosten eingespart und auch insbesondere für Weltraumanwendungen von Lasersystemen relevantes Gewicht des Laserverstärkungssystems, da auf Komponenten verzichtet werden kann, die bisher als unerlässlich angesehen wurden. Der Festkörper kann insbesondere einstückig oder mehrteilig ausgebildet sein. Scheiben- oder quaderförmig ausgebildet ist dann insbesondere bei einer zwei- oder mehrteiligen Ausbildung des Festkörpers so zu verstehen, dass die den Festkörper ausbildenden Teile jeweils scheiben- oder quaderförmig ausgebildet sind. Ferner ist die mindestens eine optische Einkoppelöffnung in Form einer wellenlängenabhängigen und einfallswinkelabhängigen Einkoppelöffnung für ein Pumplaserstrahlungsfeld und/oder ein Seedlaserstrahlungsfeld ausgebildet. Eine solche Einkoppelöffnung kann sich insbesondere über eine gesamte Oberfläche des Festkörpers erstrecken, die durch dessen Oberseite oder dessen Unterseite definiert wird. So können insbesondere Strahlungsfelder mit großem Strahlungsfelddurchmesser auf einfache Weise in den Festkörper eingekoppelt und in diesem eingefangen werden. Gemäß der Erfindung definieren/definiert die erste reflektierende Beschichtung und/oder die zweite reflektierende Beschichtung die mindestens eine wellenlängenabhängige und einfallswinkelabhängige Einkoppelöffnung. So kann also die Einkoppelöffnung durch die jeweilige Beschichtung definiert werden. Die Einkoppelöffnung bildet insbesondere auch die Auskoppelöffnung, um unter entsprechenden Bedingungen, also abhängig von der Wellenlänge sowie des Auftreffwinkels auf die Beschichtung im Inneren des Festkörpers, einen Austritt des Strahlungsfelds aus diesem zu ermöglichen. Gemäß der Erfindung ist die erste reflektierende Beschichtung in Form einer hochreflektierenden Beschichtung oder in Form einer wellenlängen- und/ oder einfallswinkelabhängigen reflektierenden Beschichtung ausgebildet. Ist eine Reflexion der Beschichtung wellenlängen- und einfallswinkelabhängig, kann insbesondere die gesamte Oberseite und/oder die gesamte Unterseite des Festkörpers zum Einkoppeln eines Strahlungsfeldes genutzt werden. Dies hat insofern Vorteile, als im Wesentlichen die gesamte von der Oberseite oder von der Unterseite definierte Fläche zum Einkoppeln des Strahlungsfeldes genutzt werden kann, sodass im Wesentlichen der gesamte Festkörper vom jeweiligen Strahlungsfeld durchsetzt wird. Ferner ist gemäß der Erfindung die zweite reflektierende Beschichtung in Form einer hochreflektierenden Beschichtung oder in Form einer wellenlängen- und/oder einfallswinkelabhängigen reflektierenden Beschichtung ausgebildet. Hier gilt entsprechend das, was vorstehend zu den unterschiedlichen Formen der ersten reflektierenden Beschichtung ausgeführt wurde. Insbesondere sind beliebige Kombinationen von hochreflektierenden Beschichtungen von wellenlängen- und/oder einfallswinkelabhängigen reflektierenden Beschichtungen auf der Oberseite und der Unterseite möglich, also beispielsweise auf der Oberseite eine wellenlängen- und einfallswinkelabhängige reflektierende Beschichtung und auf der Unterseite eine hochreflektierende Beschichtung. Auch eine umgekehrte Anordnung ist denkbar. Ferner können auch beide Beschichtungen wellenlängen- und/oder einfallswinkelabhängig reflektierend ausgebildet sein.

Günstig ist es, wenn der Festkörper einstückig ausgebildet ist. So lässt sich insbesondere eine besonders leistungsfähige Anordnung, beispielsweise zur Ausbildung eines Laserverstärkungssystems, realisieren. Zudem kann ein einstückig ausgebildeter Festkörper auch eine höhere thermische Stabilität aufweisen und weniger anfällig für Erschütterungen sein als ein zwei- oder mehrteilig ausgebildeter Festkörper.

Vorteilhaft ist es, wenn der Festkörper zwei- oder mehrteilig ausgebildet ist. Zweiteilig oder mehrteilig bedeutet in diesem Sinne insbesondere, dass der Festkörper aus zwei voneinander getrennten oder trennbaren, mithin nicht einstückig ausgebildeten Teilen, nachfolgend auch als Festkörperelemente bezeichnet, ausgebildet ist. Auf diese Weise können die zwei reflektierenden Beschichtungen jeweils auf zwei voneinander getrennten Teilen des Festkörpers angeordnet oder ausgebildet werden. So lassen sich diese Beschichtungen insbesondere in einem beliebigen Abstand voneinander anordnen. Insbesondere müssen die beiden Festkörperelemente nicht aus demselben Material ausgebildet sein. Sie bilden jedoch gemeinsam den Festkörper, auch als Festkörperelementanordnung bezeichnet. Durch eine zwei- oder mehrteilige Ausbildung des Festkörpers lässt sich insbesondere eine geometrische Komplexität der Komponenten desselben, mithin also der Festkörperelemente, verringern.

Günstigerweise umfasst der Festkörper mindestens ein erstes Festkörperelement und mindestens ein zweites Festkörperelement. Insbesondere können ein erstes und ein zweites Festkörperelement vorgesehen sein. Beispielsweise können diese in Form planparalleler Scheiben oder Platten ausgebildet sein, welche um den Neigungswinkel gegeneinander geneigt angeordnet oder ausgebildet sind.

Vorzugsweise enthält mindestens eines der mindestens zwei Festkörperelemente das laseraktive Material. Insbesondere kann das mindestens eine zweite Festkörperelement das laseraktive Material enthalten. Beispielsweise kann das mindestens eine erste Festkörperelement ausschließlich als Substrat für die erste oder die zweite reflektierende Beschichtung dienen.

Ferner kann es vorteilhaft sein, wenn mindestens eines der mindestens zwei Festkörperelemente aus einem für das Seedlaserstrahlungsfeld und/oder das Pumplaserstrahlungsfeld transluzenten Material ausgebildet ist, insbesondere aus Glas.

Günstig ist es, wenn das mindestens eine erste Festkörperelement und das mindestens eine zweite Festkörperelement planparallel ausgebildet sind. So kann der Neigungswinkel zwischen der Oberseite und der Unterseite des Festkörpers auf einfache Weise beliebig eingestellt werden. Planparallele Festkörperelemente lassen sich zudem auf besonders einfache Weise herstellen.

Gemäß einer weiteren bevorzugten Ausführungsform der Erfindung kann vorgesehen sein, dass das mindestens eine erste Festkörperelement eine erste Oberseite und eine erste Unterseite aufweist, dass das mindestens eine zweite Festkörperelement eine zweite Oberseite und eine zweite Unterseite aufweist, dass die erste Unterseite und die zweite Oberseite aufeinander zu weisend angeordnet oder ausgebildet sind und dass die erste Unterseite die die Oberseitenebene definierende Oberseite und dass die zweite Unterseite die die Unterseitenebene definierende Unterseite bilden. Alternativ kann auch die erste Oberseite die die Oberseitenebene definierende Oberseite bilden. Bei zwei Festkörperelementen können so beispielsweise vier Seitenflächen gebildet werden, welche in gewünschter Weise beschichtet werden können, also insbesondere je eine Seitenfläche eines der zwei Festkörperelemente

Vorteilhafterweise ist die zweite Oberseite des mindestens einen zweiten Festkörperelements mit einer Antireflexionsschicht versehen. So kann eine unerwünschte Reflexion des Seedlaserstrahlungsfeldes und/oder des Pumplaserstrahlungsfeldes an der zweiten Oberseite wirksam verhindert werden beziehungsweise das Eindringen des Seedlaserstrahlungsfeldes und/oder des Pumplaserstrahlungsfeldes in das mindestens eine zweite Festkörperelement wird so erleichtert.

Günstig ist es, wenn zwischen dem mindestens einen ersten Festkörperelement und dem mindestens einen zweiten Festkörperelement eine Abbildungseinrichtung angeordnet oder ausgebildet ist. Durch die Abbildungseinrichtung lässt sich insbesondere ein Abstand zwischen den mindestens zwei Festkörperelementen, aus denen der Festkörper ausgebildet ist, und damit quasi ein freier Lichtweg überbrücken.

Vorzugsweise umfasst die Abbildungseinrichtung mindestens zwei Linsen. Eine derartige Abbildungseinrichtung lässt sich kostengünstig und mit hoher Präzision bereitstellen.

Ferner kann es günstig sein, wenn die Abbildungseinrichtung in Form einer 4f-Abbildungseinrichtung oder einer Relais-Optik ausgebildet ist. So ist es insbesondere möglich, das mindestens eine erste Festkörperelement in das mindestens eine zweite Festkörperelement, welches das laseraktive Material enthält, abzubilden. Auf diese Weise lässt sich ein Abstand der beiden Grenzflächen des Festkörpers, welche jeweils auf einer Seitenfläche eines der mindestens zwei Festkörperelemente angeordnet oder ausgebildet sind, virtuell stark verringern. Eine 4f-Abbildungseinrichtung ermöglicht es insbesondere, eine nutzbare Fläche des Festkörpers zu vergrößern.

Vorteilhaft ist es, wenn die erste und/oder die zweite Beschichtung in Form eines einfallswinkelabhängigen Kantenfilters oder eines einfachen oder doppelten Bandpassfilters ausgebildet sind. Derartige Beschichtungen ermöglichen es insbesondere, ein Strahlungsfeld in Abhängigkeit eines Einfallswinkels in den Festkörper einzukoppeln. So kann beispielsweise für ein Kantenfilter ober- oder unterhalb eines bestimmten Wellenlängenbereichs für einen bestimmten Einfallswinkel ein Strahlungsfeld in den Festkörper eingekoppelt werden. Aufgrund der gegeneinander geneigten Ober- und Unterseite des Festkörpers wird das Strahlungsfeld nach dem Eintreten in den Festkörper etwas verkippt, und zwar immer um das Doppelte des Neigungswinkels zwischen aufeinanderfolgenden Reflexionen. Dadurch ändert sich nach jeder Reflexion im Innern des Festkörpers der Winkel, unter dem das Strahlungsfeld auf die Beschichtungen auftrifft. Ist unter dem Einfallswinkel von außen eine Eintrittsbedingung für das Strahlungsfeld in den Festkörper hinein erfüllt, so bleibt das Strahlungsfeld im Festkörper gefangen, wenn nach der ersten internen Rückreflexion im Festkörper die Eintritts- beziehungsweise Austrittsbedingung für das Strahlungsfeld nicht mehr erfüllt ist. Idealerweise ist für das Strahlungsfeld bereits nach einer inneren Reflexion im Festkörper die Austrittsbedingung nicht mehr erfüllt, sodass für das Strahlungsfeld an der Beschichtung, die unter dem äußeren Einfallswinkel die Einkoppelöffnung definiert, ein Durchtritt nicht mehr möglich. Vielmehr wird nun das Strahlungsfeld überwiegend zurückreflektiert, insbesondere vollständig. Mit anderen Worten ändert sich eine optische Dichte der Beschichtung für das Strahlungsfeld in Abhängigkeit eines Winkels, unter dem das Strahlungsfeld auf die Beschichtung trifft. So lässt sich ein Strahlungsfeld selektiv in den Festkörper einkoppeln und in diesem einfangen.

Günstig ist es, wenn der Kantenfilter oder der einfache oder doppelte Bandpassfilter eine Flankensteilheit aufweisen, die mindestens 1 OD/3 nm beträgt. Vorzugsweise liegt die Flankensteilheit in einem Bereich von etwa 1 OD/3 nm bis etwa 3 OD/3 nm. Insbesondere beträgt die Flankensteilheit etwa 2 OD/3 nm. Eine optische Dichte entspricht dabei insbesondere 10 dB. Mit einer minimalen Flankensteilheit wie angegeben lässt sich ein Strahlungsfeld unter einem bestimmten Einfallswinkel in den Festkörper einkoppeln und in diesem in der beschriebenen Weise einfangen. Je größer der Betrag für die Flankensteilheit ist, umso geringer sind Verluste beim Einkoppeln des Strahlungsfelds, beispielsweise durch Reflexion auf einer äußeren Oberfläche der Ober- oder Unterseite oder durch eine teilweise Transmission des Strahlungsfelds durch die erste oder die zweite Beschichtung aus dem Festkörper heraus. Grundsätzlich ist es wünschenswert, die Flankensteilheit so groß wie möglich vorzusehen.

Besonders effizient einsetzbar wird der Festkörper, wenn der Kantenfilter oder der einfache oder doppelte Bandpassfilter ein hohes Auslöschungsverhältnis aufweisen. Insbesondere beträgt eine optische Dichte der Filter mindestens 3. Weiter bevorzugt beträgt die optische Dichte der Filter mindestens 6.

Günstigerweise sind die erste und/oder zweite Beschichtung in Form einer dichroitischen Beschichtung ausgebildet. Dichroitische Schichten haben insbesondere die Eigenschaft, dass ihre Reflektivität insbesondere von Einfallswinkel, Wellenlänge und Polarisation des Lichts abhängt. Insbesondere können dichroitische Schichten auch derart ausgebildet sein, dass sie eine Bandpasseigenschaft aufweisen sowie ein Transmissionsverhalten, das nahezu polarisationsunabhängig mit dem Einfallswinkel verstellbar ist.

Vorteilhafterweise sind die erste und/oder zweite Beschichtung polarisationsunabhängig ausgebildet. Dies hat insbesondere den Vorteil, dass eine Reflektivität der ersten und/oder zweiten Beschichtung lediglich vom Einfallswinkel und der Wellenlänge des Strahlungsfelds abhängt.

Um eine möglichst hohe Zahl an Mehrfachreflexionen im Festkörper zu erhalten, ist es vorteilhaft, wenn der Neigungswinkel in einem Bereich von etwa 0° bis etwa 3° liegt. Weiter bevorzugt liegt der Neigungswinkel in einem Bereich von etwa 0,5° bis etwa 1,5°. Insbesondere kann er etwa 1° betragen. Je kleiner der Neigungswinkel ist, umso größer ist die Zahl der möglichen Mehrfachreflexionen im Festkörper. Abhängig von den Eigenschaften der ersten und/oder zweiten Beschichtung, insbesondere einer Flankensteilheit derselben, kann jedoch ein größerer Neigungswinkel vorteilhaft sein, um einen möglichst hohen Anteil des Strahlungsfelds in den Festkörper einzukoppeln und in diesem einzufangen.

Vorteilhaft ist es, wenn der Festkörper eine Dicke, die einem Abstand zwischen der Oberseite und der Unterseite entspricht, in einem Bereich von etwa 100 $\mu$m bis etwa 1000 $\mu$m aufweist. Insbesondere kann die Dicke in einem Bereich von etwa 200 $\mu$m bis etwa 500 $\mu$m liegen. Aufgrund der Neigung zwischen der Oberseite und der Unterseite ist eine Dicke des Festkörpers nicht konstant. Insbesondere können eine minimale Dicke des Festkörpers und eine maximale Dicke des Festkörpers in den angegebenen Bereichen liegen oder durch diese definiert werden.

Auf einfache Weise lässt sich ein laseraktives Material in den Festkörper einbringen, wenn der Festkörper in Form eines Kristalls oder aus Glas ausgebildet ist. Der Festkörper kann also insbesondere eine Matrix für das laseraktive Material bilden.

Günstig ist es, wenn der Kristall aus Yttrium-Aluminium-Granat oder Saphir oder aus einem Halbleiter ausgebildet ist. Derartige Kristalle lassen sich auf besonders einfache und definierte Weise mit einem laseraktiven Material dotieren.

Um laseraktives Material in gewünschter Menge und in definierter Weise im Festkörper anzuordnen, ist es vorteilhaft, wenn der Festkörper mit dem laseraktiven Material dotiert ist.

Gemäß einer weiteren bevorzugten Ausführungsform der Erfindung kann vorgesehen sein, dass das laseraktive Material mindestens ein chemisches Element aus der Gruppe der Lanthanoiden oder ein Übergangsmetall umfasst. Insbesondere kann es sich um Ytterbium, Neodym oder Erbium handeln, die bevorzugt in Yttrium-Aluminium-Granat-Kristalle dotiert werden. Optional können auch Übergangsmetalle in Form von Titan oder Zirkonium als laseraktives Material eingesetzt werden. Abhängig vom laseraktiven Material lässt sich insbesondere eine Wellenlänge des Lasers vorgeben.

Vorteilhaft ist es, wenn der quaderförmige Festkörper eine erste und eine zweite Seitenfläche aufweist und wenn die erste und zweite Seitenfläche quer, insbesondere senkrecht oder im Wesentlichen senkrecht, zur Oberseitenebene und/oder zur Unterseitenebene verlaufen. Beispielsweise können die erste und/oder die zweite Seitenfläche eine Einkoppelöffnung für ein Seedlaserstrahlungsfeld definieren. Ein Pumpstrahlungsfeld kann dann optional durch eine optische Einkoppelöffnung auf der Oberseite oder der Unterseite in den Festkörper eingekoppelt werden. Die erste und/oder zweite reflektierende Beschichtung der Ober- beziehungsweise der Unterseite kann also auch bei einem Festkörper verwendet werden, der zur Ausbildung eines Slablasers oder eines Slablaserverstärkers dient.

Vorteilhaft ist es, wenn die erste und/oder die zweite reflektierende Beschichtung in Form einer VersaChrome® TBP01-900/11-26×36-Beschichtung oder in Form einer LP02-1064RE-Beschichtung ausgebildet sind. Solche Beschichtungen sind beispielsweise von der Firma Semrock Inc. verfügbar.

Die der Erfindung zugrunde liegende Aufgabe wird ferner erfindungsgemäß durch ein Laserverstärkungssystem der eingangs beschriebenen Art gelöst, welches mindestens einen der oben beschriebenen erfindungsgemäßen scheiben- oder quaderförmigen Festkörper umfasst.

Ein Laserverstärkungssystem mit einem solchen Festkörper weist dann auch die oben im Zusammenhang mit bevorzugten Ausführungsformen von Festkörpern beschriebenen Vorteile auf.

Günstigerweise umfasst das Laserverstärkungssystem mindestens einen Pumplaser zum Erzeugen eines Pumplaserstrahlungsfeldes. Mit dem Pumplaserstrahlungsfeld kann insbesondere das laseraktive Material im Festkörper in einen laseraktiven Zustand angeregt werden.

Günstig ist es, wenn eine Wellenlänge des vom Pumplaser erzeugten Pumplaserstrahlungsfeldes in einem Wellenlängenbereich von etwa 300 nm bis etwa 1200 nm liegt. Insbesondere kann es in einem Bereich von etwa 480 nm bis etwa 580 nm oder in einem Bereich von etwa 750 nm bis etwa 850 nm oder in einem Bereich von etwa 900 nm bis etwa 1000 nm liegen. Günstig ist es, wenn die Wellenlänge des Pumplasers etwa 808 nm oder etwa 532 nm oder etwa 950 nm beträgt. Pumplaser mit Pumplaserwellenlängen in den angegebenen Bereichen eignen sich hervorragend zum Pumpen von leistungsstarken Scheibenlasern.

Ferner ist es vorteilhaft, wenn das Laserverstärkungssystem einen Seedlaser zum Erzeugen eines Seedlaserstrahlungsfeldes umfasst. So kann insbesondere eine Wellenlängenstabilität, eine Strahlqualität und eine Leistungsstabilität beziehungsweise Pulsbarkeit eines Lasers verbessert werden.

Insbesondere für Festkörper mit einer Dotierung von chemischen Elementen aus der Gruppe der Lanthanoiden ist es günstig, wenn eine Wellenlänge des vom Seedlaser erzeugten Seedlaserstrahlungsfeldes in einem Wellenlängenbereich von etwa 500 nm bis etwa 3000 nm liegt. Insbesondere kann eine Seedlaserwellenlänge in einem Bereich von etwa 1000 nm bis etwa 1100 nm liegen. Vorzugsweise beträgt die Wellenlänge des Seedlasers etwa 1030 nm. Mit dieser Wellenlänge kann insbesondere ein mit Ytterbium dotierter Yttrium-Aluminium-Granat-Kristall als Festkörper für einen Festkörperlaser genutzt werden.

Gemäß einer weiteren bevorzugten Ausführungsform der Erfindung kann vorgesehen sein, dass das Pumplaserstrahlungsfeld unter einem Pumplaserstrahlungsfeldwinkel bezogen auf eine Flächennormale der Oberseite oder der Unterseite auf den Festkörper ausgerichtet ist, dass das Seedlaserstrahlungsfeld unter einem Seedlaserstrahlungsfeldwinkel bezogen auf eine Flächennormale der Oberseite und der Unterseite auf den Festkörper ausgerichtet ist und dass sich der Pumplaserstrahlungsfeldwinkel und der Seedlaserstrahlungsfeldwinkel unterscheiden. So lassen sich auf einfache Weise ein Pumplaserstrahlungsfeld und ein Seedlaserstrahlungsfeld unabhängig voneinander in den Festkörper einkoppeln. Ferner kann durch den Einfallswinkel insbesondere auch eine Zahl der Mehrfachreflexionen vorgegeben werden unter Berücksichtigung des Neigungswinkels zwischen der Oberseite und der Unterseite.

Günstigerweise ist der Pumplaserstrahlungsfeldwinkel größer als der Seedlaserstrahlungsfeldwinkel. So können eine höhere Zahl an Mehrfachreflexionen zwischen der ersten Beschichtung und der zweiten Beschichtung mit dem Pumplaserstrahlungsfeld vorgegeben werden.

Um eine Zahl der Umläufe des Pumplaserstrahlungsfelds im Festkörper weiter zu erhöhen, ist es vorteilhaft, wenn das Laserverstärkungssystem mindestens eine erste Umlenkspiegelanordnung zum Umlenken des aus dem Festkörper austretenden Pumplaserstrahlungsfeldes auf den Festkörper zurück umfasst. Das Pumplaserstrahlungsfeld kann wie oben beschrieben im Festkörper eingefangen werden. Es kann insbesondere durch die mindestens eine erste Umlenkspiegelanordnung wieder auf den Festkörper zurück abgebildet und, wenn es unter einem geeigneten Einfallswinkel wieder auf den Festkörper auftrifft, wieder in diesem gefangen werden, sodass es diesen in Folge einer Vielzahl von Mehrfachreflexionen durchlaufen kann. Auf diese Weise lässt sich insbesondere eine Effizienz des Laserverstärkungssystems weiter verbessern.

Vorzugsweise umfasst die mindestens eine erste Umlenkspiegelanordnung mindestens einen ersten Umlenkspiegel. Sie kann auch zwei, drei oder mehr Umlenkspiegel umfassen, mit denen das Pumplaserstrahlungsfeld nach einem mehrfachen Durchlaufen des Festkörpers wieder auf diesen zurücklenkbar ist. Die erste Umlenkspiegelanordnung kann insbesondere so ausgebildet sein, dass das Pumplaserstrahlungsfeld mehrfach im Festkörper gefangen werden kann, um so möglichst viel der im Pumplaserstrahlungsfeld enthaltenen Energie im Festkörper zu absorbieren.

Günstig ist es, wenn das Laserverstärkungssystem mindestens eine zweite Umlenkspiegelanordung zum Umlenken des aus dem Festköper austretenden Seedlaserstrahlungsfelds auf den Festkörper zurück umfasst. Mit der zweiten Spiegelanordnung lässt sich, ähnlich wie mit der ersten Spiegelanordnung das Pumplaserstrahlungsfeld, das Seedlaserstrahlungsfeld noch effizienter nutzen. Es lässt sich also nicht nur einmal, sondern gegebenenfalls auch mehrfach im Festkörper einfangen, um die Leistung des Laserstrahls weiter zu erhöhen.

Zur Ausbildung eines effizienten Festkörperlasers ist es vorteilhaft, wenn der Festkörper in einem Resonator angeordnet ist.

Günstigerweise umfasst der Resonator einen Endspiegel und einen Auskoppelspiegel. Der Laserstrahl kann so gezielt verstärkt und bei Bedarf kontinuierlich oder gepulst aus dem Resonator ausgekoppelt werden.

Vorzugsweise ist der Endspiegel hochreflektierend ausgebildet. Auf diese Weise kann der Laserstrahl den Resonator durch den Endspiegel nicht verlassen.

Auf besonders einfache und kompakte Weise ausbilden lässt sich das Laserverstärkungssystem, wenn der Endspiegel die erste reflektierende Beschichtung umfasst. Die erste reflektierende Beschichtung kann also insbesondere auch den Endspiegel des Resonators bilden. Insbesondere kann der Festkörper mit der ersten reflektierenden Beschichtung auf einem Kühlkörper angeordnet sein, um die durch die absorbierte Energie aus dem Pumplaserstrahlungsfeld und/oder aus dem Seedlaserstrahlungsfeld in den Festkörper abgegebene Wärme abzuführen.

Günstig kann es ferner sein, wenn das Laserverstärkungssystem mindestens ein dispersives optisches Element zum wellenlängenabhängigen Aufweiten oder Aufspalten des vom Pumplaser erzeugten Pumplaserstrahlungsfeldes und/oder des vom Seedlaser erzeugten Seedlaserstrahlungsfeldes umfasst. Mit dem dispersiven optischen Element ist es insbesondere möglich, das von einer nicht monochromatischen Pumplichtquelle erzeugte Pumpstrahlungsfeld so aufzuweiten oder aufzuspalten, dass es möglich ist, unterschiedliche Wellenlängen in unterschiedlichen Winkeln zu kollimieren, sodass prinzipiell eine Einkopplung eines nichtmonochromatischen Pumpstrahlungsfeldes in einem Schritt in den Festkörper hinein möglich ist. So kann vermieden werden, dass lediglich ein Teil des Spektrums der Pumplichtquelle im Festkörper zur Anregung des laseraktiven Mediums gefangen werden kann. Durch das dispersive Medium kann insbesondere auf zusätzliche Spiegel zum Zurücklenken von Anteilen des Spektrums der Pumplichtquelle, die vom Festkörper reflektiert werden, um bei einem zweiten Einfall des Pumplaserstrahlungsfeldes auf den Festkörper einen Einfallswinkel für das verbleibende Spektrum zu optimieren, verzichtet werden. Dies kann gegebenenfalls mehrfach wiederholt werden mit mehreren Spiegeln.

Eine besonders einfache Ausbildung des Laserverstärkungssystems kann insbesondere dadurch erreicht werden, dass das dispersive optische Element in Form eines Prismas oder eines optischen Gitters ausgebildet ist.

Vorzugsweise ist das optische Gitter in Form eines Transmissionsgitters ausgebildet. Alternativ kann es auch in Form eines Reflexionsgitters ausgebildet sein.

Gemäß einer weiteren bevorzugten Ausführungsform der Erfindung kann vorgesehen sein, dass das Pumplaserstrahlungsfeld unter einem von 0° abweichenden Pumplaserstrahlungsfeldrotationswinkel bezogen auf eine zur Oberseitenebene und zur Unterseitenebene senkrecht verlaufende Symmetrieebene des Festkörpers auf den Festkörper gerichtet ist und/oder dass das Seedlaserstrahlungsfeld unter einem von 0° abweichenden Seedlaserstrahlungsfeldrotationswinkel bezogen auf die Symmetrieebene auf den Festkörper gerichtet ist. Das Pumplaserstrahlungsfeld unter dem Pumplaserstrahlungsfeldrotationswinkel und/oder das Seedlaserstrahlungsfeld unter dem Seedlaserstrahlungsfeldrotationswinkel auf den Festkörper zu richten, hat insbesondere den Vorteil, dass die Strahlungsfelder nicht wieder direkt in diejenige Richtung zurückgelenkt werden, aus der sie auf den Festkörper auftreffen. So ist eine räumliche Trennung zwischen einfallenden und ausfallenden Ästen eines Strahlungsfeldes auf einfache Weise möglich. Optional kann das Pumplaserstrahlungsfeld auch durch eine Mehrzahl von Pumplaserstrahlen definiert sein.

Um eine einfache weitere Trennung zwischen dem Pumplaserstrahlungsfeld und dem Seedlaserstrahlungsfeld zu ermöglichen, insbesondere zwischen den aus dem Festkörper austretenden Stahlungsfeldern, ist es günstig, wenn sich der Pumplaserstrahlungsfeldrotationswinkel und der Seedlaserstrahlungsfeldrotationswinkel unterscheiden.

Gegebenenfalls zusätzliche optische Anordnungen wie insbesondere die erste und/oder die zweite Umlenkspiegelanordnung lassen sich auf einfache Weise räumlich positionieren, wenn der Pumplaserstrahlungsfeldrotationswinkel und/oder der Seedlaserstrahlungsfeldrotationswinkel in einem Bereich zwischen 0° und etwa 10° liegen. Insbesondere können sie in einem Bereich von etwa 4° bis etwa 6° liegen. Bevorzugt betragen sie etwa 5°.

Um eine Aufweitung des Pumplaserstahlungsfelds möglichst zu vermeiden, ist es vorteilhaft, wenn das Pumplaserstrahlungsfeld kollimiert ist.

Die eingangs gestellte Aufgabe wird ferner durch einen Festkörperlaser gelöst, welcher eines der oben beschriebenen Laserverstärkungssysteme umfasst.

Ein solcher Festkörperlaser weist dann auch die oben in Verbindung mit bevorzugten Ausführungsformen von Laserverstärkungssystemen beschriebenen Vorteile auf.

Ferner wird die Verwendung eines erfindungsgemäßen Festkörperlasers zur Materialbearbeitung, insbesondere zum Schneiden, Fügen, Sintern und/oder Gravieren, sowie für laserablative Antriebe und zur Weltraumschrottbeseitigung vorgeschlagen.

Die nachfolgende Beschreibung bevorzugter Ausführungsformen der Erfindung dient im Zusammenhang mit den Zeichnungen der näheren Erläuterung. Es zeigen:

Figur 1: eine schematische Darstellung eines Laserverstärkungssystems eines Festkörperlasers gemäß dem Stand der Technik;

Figur 2: eine schematische Darstellung eines Laserverstärkungssystems eines Festkörperlasers gemäß der Erfindung;

Figur 3: eine schematische Darstellung der optischen Dichte der Beschichtung eines VersaChrome® TBP01-900/11-26×36-Filters für Einfallswinkel von 0° und 60°;

Figur 4: eine schematische Darstellung von Mehrfachreflexionen in einem beschichteten Festkörper für einen Seedlaserstrahl und einen Pumplaserstrahl;

Figur 5: eine schematische Darstellung eines Hauptstrahlverlaufs aus y-Richtung;

Figur 6: eine Ansicht des in Figur 5 dargestellten, um 45° um die y-Achse gedrehten Hauptstrahlverlaufs;

Figur 7: eine schematische Darstellung eines Hauptstrahlverlaufs einer Doppeldurchgangsanordnung;

Figur 8: eine schematische Darstellung des Vergleichs einer sphärischen Deformation des Festkörpers für Einfach oder Mehrfachreflexion eines Strahlungsfeldes im Festkörper;

Figur 9: eine Grauwertdarstellung von Phasenfehlern höherer Ordnung;

Figur 10: eine schematische Darstellung des Auftreffens eines Pumplaserstrahlungsfeldes auf den Festkörper;

Figur 11: eine schematische Darstellung einer Doppeldurchgangsanordnung für die Verstärkung des Laserstrahls durch einen Seedstrahl;

Figur 12: eine schematische Anordnung des Festkörpers in einem Laserresonator;

Figur 13: eine schematische Schnittansicht eines Festkörpers mit korrektem Einfallswinkel eines Strahlungsfelds mit einem Bandpass als erster Beschichtung und einer hochreflektierenden Beschichtung als Zweitbeschichtung;

Figur 14: eine Ansicht ähnlich Figur 13, jedoch mit zu flachen und zu steilen Auftreffwinkeln des Strahlungsfelds auf den Festkörper;

Figur 15: eine Ansicht wie in Figur 13, jedoch mit einem Einfallswinkel der einen direkten Wiederaustritt des Strahlungsfelds aus dem Festkörper ermöglicht;

Figur 16: eine schematische Schnittansicht eines Festkörpers mit einer ersten Beschichtung in Form eines doppelten Bandpassfilters und einer unteren Beschichtung in Form einer hochreflektierenden Beschichtung mit einfallendem und austretendem Strahlungsfeld;

Figur 17: eine schematische Schnittansicht eines Festkörpers, welcher sowohl eine erste als auch eine zweite Beschichtung in Form eines Bandpassfilters aufweist, mit eintretendem und austretendem Strahlungsfeld;

Figur 18: eine schematische Darstellung eines Festkörpers mit einer Einkoppelöffnung in Form eines nicht beschichteten, einen Einkoppelbereich definierenden Oberflächenbereichs der Oberseite;

Figur 19: eine Schnittansicht durch einen Festkörper, der mit Beschichtungen analog dem Festkörper in Figur 13 versehen ist, wobei durch eine schmale Kante des Festkörpers ein Seedstrahlungsfeld in den Festkörper eingekoppelt und durch die erste Beschichtung gepumpt wird;

Figur 20: eine schematische Darstellung eines Festkörpers mit einer ersten Beschichtung in Form eines Bandpassfilters und einer zweiten Beschichtung in Form einer hochreflektierenden Beschichtung, wobei eine nicht monochromatische Pumplichtquelle mittels eines dispersiven Elements aufgespalten und das so aufgespaltene Pumpstrahlungsfeld wellenlängenabhängig unter unterschiedlichen Einfallswinkeln in den Festkörper eingekoppelt wird.

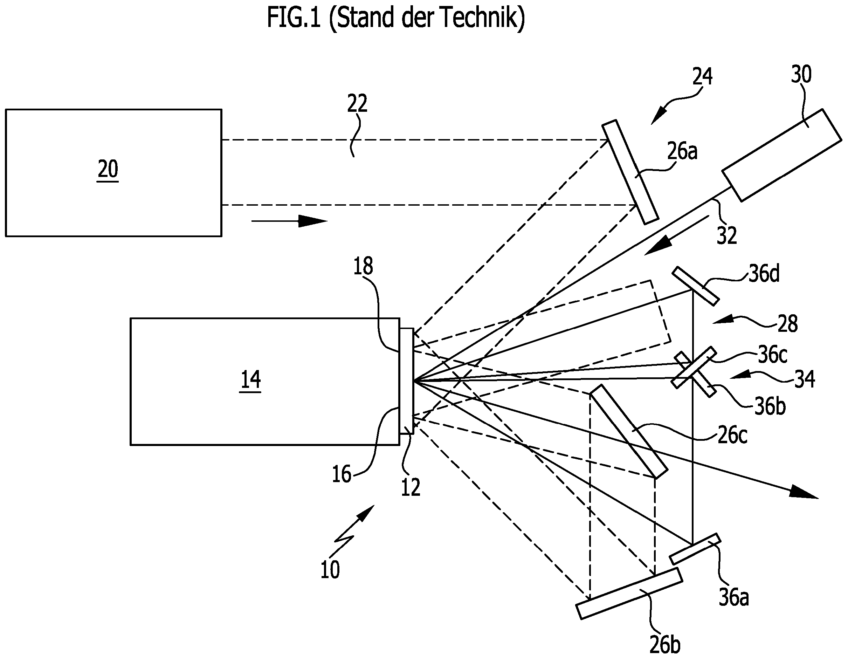

In Figur 1 ist ein Ausführungsbeispiel eines insgesamt mit dem Bezugszeichen 10 bezeichneten Festkörperlasers schematisch dargestellt, wie er prinzipiell aus dem Stand der Technik bekannt ist.

Ein scheiben- oder quaderförmiger Festkörper 12, welcher mindestens ein laseraktives Material enthält, ist auf einer Kühlanordnung 14 angeordnet. Eine Rück- oder Unterseite 16 des Festkörpers 12 ist mit einer ersten Beschichtung 18 versehen, die hochreflektierend ausgebildet ist. Zum Anregen des laseraktiven Materials im Festkörper 12 dient eine Pumplichtquelle in Form eines Pumplasers 20, der ein Pumpstrahlungsfeld in Form eines Pumplaserstrahlungsfeld 22 erzeugt.

Eine erste Umlenkspiegelanordnung 24 umfasst mehrere Umlenkspiegel 26, nämlich einen Umlenkspiegel 26a, einen Umlenkspiegel 26b und einen Umlenkspiegel 26c. Das mit dem Pumplaser 20 erzeugte Pumplaserstrahlungsfeld 22 wird mit dem Umlenkspiegel 26a auf den Festkörper 12 umgelenkt. Es durchläuft den Festkörper 12 und wird an der ersten Beschichtung 18 reflektiert und tritt wieder aus dem Festkörper 12 aus.

Der Teil des Pumplaserstrahlungsfelds 22, der nicht vom Festkörper 12 absorbiert wurde, trifft auf den Umlenkspiegel 26b, welcher das Pumplaserstrahlungsfeld 22 auf den Umlenkspiegel 26c umlenkt, welcher wiederum das Pumplaserstrahlungsfeld 22, nun unter einem anderen Winkel als der Umlenkspiegel 26a, wieder auf den Festkörper 12 umlenkt.

Das Pumplaserstrahlungsfeld 22 durchläuft den Festkörper 12 wiederum zweimal, wobei es an der ersten Beschichtung 18 reflektiert wird.

Selbstverständlich kann die erste Umlenkspiegelanordnung 24 noch mehr Umlenkspiegel 26 umfassen, um das Pumplaserstrahlungsfeld 22 noch öfter den Festkörperlaser 12 durchlaufen zu lassen.

Mehrfache Durchläufe des Pumplaserstrahlungsfelds 22 durch den Festkörper 12 sind erforderlich, da der Festkörper 12 aufgrund seiner geringen Dicke von nur etwa 100 $\mu$m bis etwa 1000 $\mu$m bei einem einzigen Durchgang des Pumplaserstrahlungsfelds 22 nicht genügend Energie zur Anregung des laseraktiven Materials absorbieren würde.

Der Festkörperlaser 10 umfasst ein Laserverstärkungssytem 28, dem insbesondere auch die erste Umlenkspiegelanordnung 24 sowie der Pumplaser 20 zugeordnet sind.

Das Laserverstärkungssystem 28 umfasst ferner einen Seedlaser 30 zur Erzeugung eines Seedlaserstrahlungsfelds 32. Mit der Seedlaserstrahlung 32 wird die eigentliche Laseraktivität des Festkörpers 12 gesteuert. Eine Wellenlänge des Seedlaserstrahlungsfelds 32 gibt die Wellenlänge für den Festkörperlaser 10 und die von ihm emittierte Strahlung vor.

Um auch hier eine hohe Effizienz zu erreichen, und zwar insbesondere für die Konversion laseraktiver Zustände im laseraktiven Material, ist eine zweite Umlenkspiegelanordnung 34 vorgesehen, um das Seedlaserstrahlungsfeld 32 mehrfach auf den Festkörper 12 umzulenken, so dass das Seedlaserstrahlungsfeld 32 den Festkörper 12 ebenfalls mehrfach durchlaufen kann.

Das vom Seedlaser 30 erzeugte Seedlaserstrahlungsfeld 32 trifft zunächst auf den Festkörper 12, durchläuft diesen einmal, wird an der ersten Beschichtung 18 reflektiert und tritt unter einem Ausfallswinkel aus dem Festkörper 12 aus, der einem Einfallswinkel des auf den Festkörper 12 auftreffenden Seedlaserstrahlungsfelds 32 entspricht. Bei dem in Figur 1 schematisch dargestellten Ausführungsbeispiel des Festkörperlasers 10 sind beispielhaft vier Umlenkspiegel 36a, 36b, 36c und 36d vorgesehen.

Das Seedlaserstrahlungsfeld 32 trifft nach einem ersten doppelten Durchgang durch den Festkörper 12 auf den Umlenkspiegel 36a, welcher das Seedlaserstrahlungsfeld 32 auf den Umlenkspiegel 36b umlenkt. Von diesem trifft das Seedlaserstrahlungsfeld 32 unter einem anderen Einfallswinkel wieder auf den Festkörper 12 auf. Nach einem weiteren doppelten Durchgang durch den Festkörper 12 trifft das Seedlaserstrahlungsfeld 32 auf den Umlenkspiegel 36c, welcher wiederum das Seedlaserstrahlungsfeld 32 auf einen weiteren Umlenkspiegel 36d umlenkt, von dem das Seedlaserstrahlungsfeld 32 wieder auf den Festkörper 12 zurückgelenkt wird, so dass es den Festkörper 12 noch einmal in der beschriebenen Weise durchlaufen kann.

Wie auch für den Pumplaser 20 und das von diesem erzeugte Pumplaserstrahlungsfeld 22 beschrieben, kann die zweite Umlenkspiegelanordnung 34 noch mehr Umlenkspiegel umfassen, um noch weitere Durchläufe des Seedlaserstrahlungsfelds 32 durch den Festkörper 12 zu ermöglichen.

Der in Figur 1 schematisch dargestellte Aufbau des Festkörperlasers 10 ist sehr aufwendig, da er eine große Anzahl von Spiegeln erfordert, die alle genau justiert werden müssen. Zudem weisen diese eine nicht zu vernachlässigende Masse auf. Diese hat insbesondere den Nachteil, dass beim Einsatz eines solchen Festkörperlasers 10 im Weltraum große Massen in den Weltraum befördert werden müssen, was mit hohen Kosten verbunden ist.

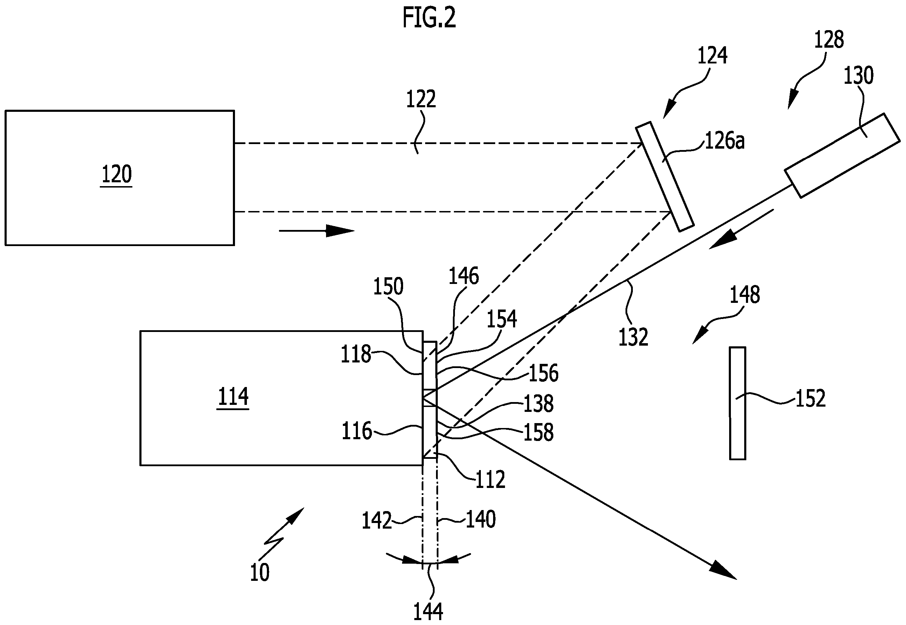

Figur 2 zeigt nun ein Ausführungsbeispiel eines erfindungsgemäßen Festkörperlasers 110. Er umfasst ein Laserverstärkungssystem 128 mit einem Pumplaser 120 zur Erzeugung eines Pumplaserstrahlungsfelds 122 und einen Seedlaser 130 zum Erzeugen eines Seedlaserstrahlungsfelds 132.

Das Laserverstärkungssystem 128 umfasst ferner einen Festkörper 112 mit einer Oberseite 138 und einer Unterseite 116. Die Oberseite 138 definiert eine Oberseitenebene 140, die Unterseite 116 eine Unterseitenebene 142. Die Oberseitenebene 140 und die Unterseitenebene 142 verlaufen nicht parallel zueinander, sondern schließen zwischen sich einen Neigungswinkel 144 ein. Der Festkörper 112 ist einstückig ausgebildet, also aus einem Stück geformt.

Die Unterseite 116 ist mit einer ersten Beschichtung 118 versehen, die Oberseite 138 mit einer zweiten Beschichtung 146.

Sowohl die erste Beschichtung 118 als auch die zweite Beschichtung 146 sind in Form reflektierender Beschichtungen ausgebildet. Diese können auf unterschiedliche Arten ausgebildet sein. Beispielsweise können sie wellenlängenunabhängig hochreflektierend ausgebildet sein oder wellenlängen- und einfallswinkelabhängig hochreflektierend. Mögliche Varianten werden nachfolgend noch im Einzelnen erörtert.

Der Festkörper 112 ist auf einer Kühlanordnung 114 aufgebracht, um durch Absorption von Energie aus dem Pumplaserstrahlungsfeld 122 und dem Seedlaserstrahlungsfeld 132 entstehende Wärme abzuführen.

Der Festkörperlaser 110 kann ferner einen Resonator 148 mit einem Endspiegel 150 und einem Auskoppelspiegel 152 umfassen.

Optional kann das Laserverstärkungssystem 128 eine erste Umlenkspiegelanordnung 124 umfassen, beispielsweise mit einem Umlenkspiegel 126a, welcher das Pumplaserstrahlungsfeld 122 auf den Festkörper 112 umlenkt. Die erste Umlenkspiegelanordnung 124 kann noch weitere Umlenkspiegel umfassen, um das Pumplaserstrahlungsfeld 122, ähnlich wie bei der in Figur 1 dargestellten Anordnung, mehrfach auf den Festkörper 112 zurückzulenken. Grundsätzlich ist dies jedoch beim erfindungsgemäßen Festkörperlaser 110 nicht erforderlich, da das Pumplaserstrahlungsfeld 122 und/oder das Seedlaserstrahlungsfeld 132 den Festkörper 112 nicht nur einmal hin und einmal zurück durchlaufen, sondern mehrfach, wie nachfolgend noch erläutert wird.

Dies wird dadurch erreicht, dass das Pumplaserstrahlungsfeld 122 und/oder das Seedlaserstrahlungsfeld 132 zwischen den Beschichtungen 118 und 146 im Festkörper 112 quasi eingefangen werden, so dass sie zwischen den Beschichtungen 118 und 146 mehrfach hin und her reflektiert werden.

Zum Einfangen oder Einkoppeln des Pumplaserstrahlungsfelds 122 und/oder des Seedlaserstrahlungsfelds 132 weisen die Oberseite 138 und/oder die Unterseite 116 mindestens eine optische Einkoppelöffnung 154 auf.

Bei dem in Figur 2 schematisch dargestellten Ausführungsbeispiel wird die Einkoppelöffnung 154 durch die zweite Beschichtung 146 gebildet. Diese ist in Form einer wellenlängen- und einfallswinkelabhängigen reflektierenden Beschichtung 156 ausgebildet.

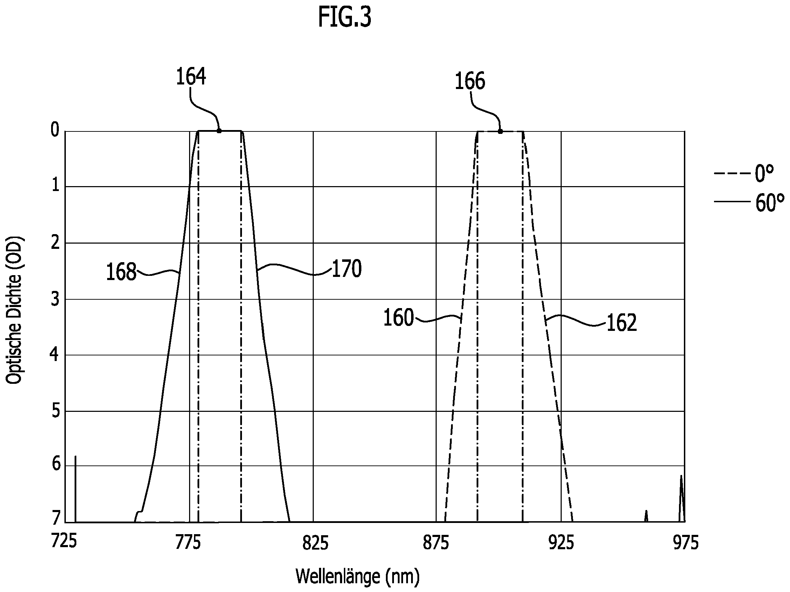

Die Beschichtung 146 bildet einen einfachen Bandpassfilter 158. Dessen Eigenschaften sind schematisch in Figur 3 dargestellt. So ist für den Bandpassfiler 158 ein Verlauf der optischen Dichte der Beschichtung 156 für einen Einfallswinkel von 0° sowie für einen Einfallswinkel von 60° schematisch dargestellt. Demnach kann elektromagnetische Strahlung in einem Durchlässigkeitsbereich 166 für Wellenlängen von etwa 890 nm bis etwa 910 nm die Beschichtung 156 durchdringen. Eine optische Dichte der Beschichtung 156 beträgt für eine senkrecht auf die Beschichtung 156 auftreffende Strahlung 0 im angegebenen Wellenlängenbereich.

Mit abnehmender Wellenlänge erhöht sich eine optische Dichte der Beschichtung 156, mit zunehmender Wellenlänge über 910 nm erhöht sich die optische Dichte der Beschichtung ebenfalls. Sowohl eine kurzwellige Flanke 160 als auch eine langwellige Flanke 162 des Verlaufs der optischen Dichte der Beschichtung weist eine Flankensteilheit von etwa 2 OD/3 nm auf.

Trifft auf die Beschichtung 156 elektromagnetische Strahlung unter einem Winkel von 60°, ergibt sich der in Figur 3 links dargestellte Verlauf der optischen Dichte in Abhängigkeit der Wellenlänge. Hier ergibt sich beispielhaft ein Durchlässigkeitsbereich 164 von etwa 775 bis 795 nm mit einer optischen Dichte von 0. Auch hier fallen eine kurzwellige Flanke 168 und eine langwellige Flanke 170 des optischen Dichteverlaufs mit einer Steilheit von etwa 2 OD/3 nm ab.

Die in Verbindung mit Figur 3 beispielhaft erläuterte Eigenschaft der Beschichtung 156 ermöglicht es also, elektromagnetische Strahlung einer bestimmten Wellenlänge unter einem vorgegebenen Einfallswinkel in den Festkörper einzukoppeln. Dies kann beispielsweise bei einer Wellenlänge von 780 nm unter einem Winkel von 60° erfolgen für eine Beschichtung 156, mit den in Figur 3 dargestellten Durchlässigkeitseigenschaften.

Wird der Winkel, unter dem elektromagnetische Strahlung mit einer Wellenlänge von 780 nm auf die Beschichtung 156 auftrifft, kleiner oder größer, nimmt die optische Dichte der Beschichtung 156 sowohl für kleinere als auch für größere Winkel ab. Trifft die Strahlung also nach Reflexion an der ersten Beschichtung unter einem anderen Winkel auf die zweite Beschichtung 146, kann aufgrund der besonderen Eigenschaften der Beschichtung 156 die Bedingung erfüllt sein, dass für die im Festkörper 112 eingetretene elektromagnetische Strahlung die Durchlässigkeitsbedingung für den Einfallswinkel, mit dem die Strahlung auf die zweite Beschichtung 146 zum zweiten Mal auftrifft, nicht mehr erfüllt ist. Ist die optische Dichte für die Strahlung unter dem neuen Einfallswinkel größer als Null, wird die Strahlung an der zweiten Beschichtung 146 mindestens teilweise reflektiert.

Diese Änderung des Auftreffwinkels der Strahlung auf die zweite Beschichtung 146 nach einem Hin- und Rücklauf der Strahlung durch den Festkörper 112 ergibt sich aufgrund der relativ zueinander geneigten Oberseite 138 und der Unterseite 116. Aufgrund des Reflexionsgesetzes wird nach jedem doppelten Durchlauf durch den Festkörper 112 der Winkel, unter dem die Strahlung auf die zweite Beschichtung 146 auftrifft, um das Doppelte des Neigungswinkels 144 verringert.

Damit ergibt sich, dass die Beschichtung 156 insgesamt eine optische Einkoppelöffnung 154 für das Pumplaserstrahlungsfeld 122 und/oder das Seedlaserstrahlungsfeld 132 bildet, und zwar abhängig von deren Wellenlänge und einem Einfallswinkel, unter dem diese jeweils auf die Beschichtung 156 zum ersten Mal auftreffen. Ergibt sich nach einem Hin- und Rücklauf durch den Festkörper 112, bei dem die Strahlung an der ersten Beschichtung 118 vollständig zurückreflektiert wird, die beschriebene Bedingung, dass für die jeweiligen Wellenlängen eine optische Dichte der Beschichtung 156 für den um das Doppelte des Neigungswinkels 144 geänderten Auftreffwinkel der Strahlung auf die Beschichtung 156 erfüllt ist, wird die Strahlung an der Beschichtung 156 mit zunehmenden Anteilen reflektiert und durchläuft so den Festkörper 112 mehrfach.

Die Anzahl der Durchläufe hängt also sowohl vom Neigungswinkel als auch vom Einfallswinkel der Strahlung ab.

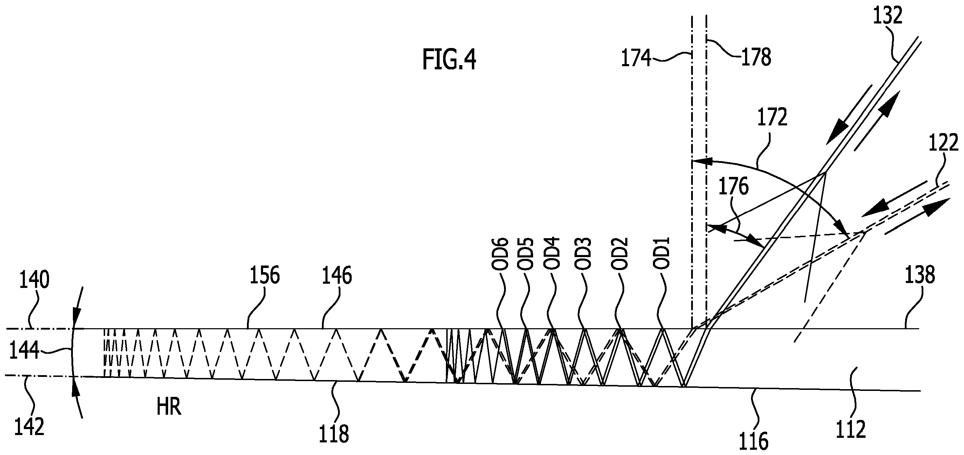

Das Einkoppeln eines Pumpstrahlungsfeldes 122 sowie eines Seedlaserstrahlungsfeldes 132 in den Festkörper 112 ist beispielhaft in Figur 4 dargestellt.

Das Pumplaserstrahlungsfeld 122 wird unter einem Pumplaserstrahlungsfeldwinkel 172 bezogen auf eine Flächennormale zur Oberseite 138 auf den Festkörper 112 gelenkt. Eine Wellenlänge des Pumplaserstrahlungsfelds 122 beträgt 780 nm. Der Neigungswinkel 144 beträgt 1°. Die Beschichtung 156 ist gebildet durch die Beschichtung eines VersaChrome®-Filters der Firma Semrock Inc. mit der Bezeichnung TBP01-900/11-26x36.

Ein Verkippungsverhalten dieser Beschichtung lässt sich in bekannter Weise gemäß der nachfolgenden Formel berechnen:

$$\lambda(\theta) = \lambda(0)\sqrt{1 - \frac{\sin^2(\theta)}{n_{eff}^2}}$$

Dabei ist $\lambda(\theta)$ die Wellenlänge bei einem gegebenen Einfallswinkel, wobei 0° einem senkrechten Einfall auf die Beschichtung entspricht, und $n_{eff}$ ist der effektive Brechungsindex der Beschichtung. $\Theta$ ist der Einfallswinkel bezogen auf die Flächennormale 174.

Das Pumplaserstrahlungsfeld 122 tritt durch die Beschichtung 156 in den Festkörper 112 ein und wird an der ersten Beschichtung 118 vollständig reflektiert. Es trifft dann unter einem Winkel von 60°-2°=58° wieder auf die Beschichtung 156 auf und wird an dieser zu großen Teilen in Richtung auf die erste Beschichtung 118 zurückreflektiert.

Unter Berücksichtigung des Neigungswinkels 144 sowie des Pumplaserstrahlungsfeldwinkels 172 ergeben sich 33 Doppelreflexionen des Pumplaserstrahlungsfelds 122 im Festkörper 112.

Unter Berücksichtigung des abnehmenden Auftreffwinkels des Pumpstrahlungsfelds 122 nach jeder Reflexion an der ersten Beschichtung 118 auf die zweite Beschichtung 146 läuft das Pumpstrahlungsfeld 122 praktisch auf demselben Weg wieder zurück und tritt dann nahezu an derselben Stelle wieder aus dem Festkörper 112 aus.

Das Seedlaserstrahlungsfeld 132 trifft unter einem Seedlaserstrahlungsfeldwinkel 176 bezogen auf eine Flächennormale 178 der Oberseite auf die Beschichtung 156. Bei dem in Figur 2 schematisch dargestellten Beispiel beträgt die Wellenlänge des Seedlaserstrahlungsfeld 845 nm, der Seedlaserstrahlungsfeldwinkel 176 beträgt 36°.

In analoger Weise wie für das Pumpstrahlungsfeld 122 beschrieben, wird das Seedlaserstrahlungsfeld 132 im Festkörper 112 eingefangen. Hier sind schematisch die optischen Dichten nach den ersten sechs Rückreflexionen an der ersten Beschichtung 118 angegeben.

Bei der ersten Beschichtung 118 handelt es sich um eine hochreflektierende Beschichtung, die unabhängig von der Wellenlänge und dem Einfallswinkel ist.

Unter Berücksichtigung des im Vergleich zum Pumplaserstrahlungsfeldwinkels 172 kleineren Seedlaserstrahlungsfeldwinkels 176 ergeben sich 23 Doppelreflexionen im Festkörper 112.

Bei geeigneten Beschichtungen können Wellenlängen von etwa 951 nm für das Pumplaserstrahlungsfeld 122 und von etwa 1030 nm Seedlaserstrahlungsfeld 132 im Festkörper in der beschriebenen Weise eingefangen werden. Für diese Wellenlängen kann beispielsweise für einen Festkörper 112, der aus einem Yttrium-Aluminium-Granat-Kristall gebildet ist, welcher mit Ytterbium als laseraktivem Material dotiert ist, eine Beschichtung der Firma Semrock Inc. mit der Bezeichnung LP02-1064RE zum Einsatz kommen. Diese Beschichtung bildet einen Langpasskantenfilter, der lange Wellenlängen transmittiert. Ein Neigungswinkel 144 für ein solches System beträgt 0,5°. Eine mittlere Dicke des keilförmigen Festkörpers beträgt 200 μm. Eine Pumpwellenlänge des Pumplasers 120 beträgt 941 nm, eine Wellenlänge der vom Seedlaser 130 erzeugten Seedlaserstrahlungsfeldes 132 beträgt 1030 nm. Sowohl das Pumplaserstrahlungsfeld 122 als auch das Seedlaserstrahlungsfeld 132 sind P-polarisiert. Der Pumplaserstrahlungsfeldwinkel 172 beträgt 48°, der Seedlaserstrahlungsfeldwinkel 176 beträgt 25°. Damit ergeben sich 26 Umläufe des Seedlaserstrahlungsfelds 132 im Festkörper 112 und 48 Umläufe des Pumplaserstrahlungsfelds 122. Insgesamt ergeben sich damit etwa 4,5% Gesamtverluste für das Seedlaserstrahlungsfeld 132, wenn keine Verstärkung berücksichtigt wird.

Die Beschichtung LP02-1064RE hat gegenüber der Beschichtung TBP01-900/ 11-26x36 den Vorteil, dass sich eine Transmitivität der Beschichtung bereits nach einem Umlauf um mehrere optische Dichten verringert, sodass Sekundärstrahlen keine nennenswerten Verlustquellen oder Störquellen darstellen und dadurch eine Gesamtverstärkung des Systems lediglich um einige Prozent reduziert wird.

Um die Zahl an Umläufen weiter zu erhöhen, muss der Neigungswinkel 144 verringert werden. Eine Voraussetzung für das Erreichen der angegebenen Verstärkungs- und Verlustwerte ist die P-Polarisation des Pumplaserstrahlungsfelds 122 und des Seedlaserstrahlungsfelds 132.

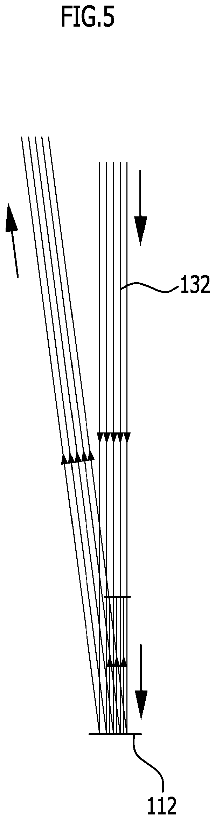

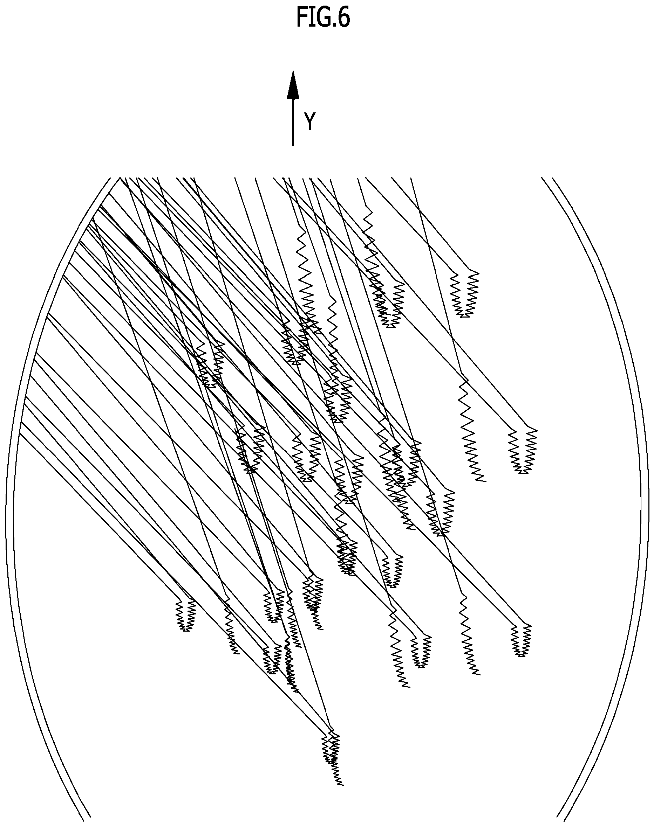

Um den beschriebenen direkten Rücklauf der Strahlungsfelder 122 und 132 entgegenzuwirken, besteht die Möglichkeit, den Festkörper 112 leicht zu verdrehen, also die Strahlungsfelder unter einem Pumplaserstrahlungfeldrotationswinkel 180 oder unter einem Seedlaserstrahlungsfeldrotationswinkel 182 jeweils bezogen auf eine zur Oberseitenebene 140 und zur Unterseitenebene 142 senkrecht verlaufende Symmetrieebene 184 zu verdrehen. Für einen scheibenförmigen Festkörper 112 mit einem Durchmesser von 25 mm und einem Neigungswinkel 144 von 1° und einem Pumplaserstrahlungsfeldrotationswinkel 180 und einem Seedlaserstrahlungsfeldrotationswinkel 183 von 5° ergibt sich ein Verlauf der Strahlungsfelder wie sie schematisch in den Figuren 5 und 6 dargestellt sind. In diesen beiden Figuren sind lediglich beispielhaft Strahlen dargestellt, die 83% der Leistung des Seedlaserstrahlungsfelds 132 und 93% der Leistung des Pumplaserstrahlungsfelds 122 überschreiten.

Figur 5 zeigt den Strahlengang in einer Ansicht aus y-Richtung. In Figur 6 ist beispielhaft eine Nahansicht des Festkörpers 112 dargestellt, die um 45 Grad bezogen auf die y-Achse verdreht ist.

In Figur 5 ist deutlich erkennbar, dass das aus dem Festkörper 112 austretende Seedlaserstrahlungsfeld 132 einen kleinen Winkel mit dem einfallenden Seedlaserstrahlungsfeld 132 einschließt und so räumlich einfach getrennt werden kann.

Ein Verlauf des Pumplaserstrahlungsfelds 122 sowie des Seedlaserstrahlungsfelds 132 im keilförmigen Festkörper 112 ist in Figur 6 schematisch dargestellt. Der Verlauf folgt hier einem Bogen, sodass das Pumplaserstrahlungsfeld 122 unter einem anderen Winkel wieder aus dem Festkörper 112 austritt.

Die Anzahl der Reflexionen ist im Wesentlichen unabhängig von einer Position auf dem Festkörper. Lediglich eine Größe des bogenförmigen Verlaufs und damit des Lichtwegs wird durch die jeweils lokale Dicke des Festkörpers bestimmt.

Um überschüssige Lichtwege zu kompensieren, kann optional eine Dotierung des Festkörpers 112 mit einer gleichmäßigen effektiven Dicke erfolgen. Die Dotierung ist in diesem Fall so gewählt, dass eine Dotierungsdichte mit abnehmender Dicke des keilförmigen Festkörpers 112 zunimmt.

Alternativ könnte die zweite Beschichtung 146 auch auf einem zweiten Festkörper oder Substrat ausgebildet sein. Allerdings müsste dieses, ohne Möglichkeit einer effektiven Kühlung, vom verstärkten Seedlaserstrahlungsfeld 132 passiert werden.

Grundsätzlich müssen das Seedlaserstrahlungsfeld 132 und das Pumplaserstrahlungsfeld 122 nicht in derselben Einfallsebene liegen. Auch sollte vorzugsweise eine Verdrehung des keilförmigen Festkörpers 112 bezogen auf die Symmetrieebene 184 nicht zu groß gewählt werden, da dies im ungünstigsten Fall zu einer Vergrößerung des Reflexionswinkels führt, statt zu einer Verkleinerung.

Vorzugsweise können sowohl das Pumplaserstrahlungsfeld 122 als auch das Seedlaserstrahlungsfeld 132 kollimiert werden. Dabei wird bevorzugt eine Strahldivergenz von kleiner als 1° erreicht.

Handelt es sich bei der Pumplichtquelle um eine nicht monochromatische Pumplichtquelle, wird nur ein Teil der von dieser erzeugten Strahlung, also ein Teil des Spektrums, in der beschriebenen Weise im Festkörper 112 eingefangen. Der nicht eingefangene, also der von der zweiten Beschichtung 146 vom Festkörper 112 zurückreflektierte Anteil des Pumplaserstrahlungsfelds 132, kann beispielsweise über ein oder mehrere Spiegel erneut auf den Festkörper 112 gelenkt werden und bei diesem zweiten Einfall unter einem Winkel, der auf das verbleibende Spektrum optimiert ist, auf den Festkörper 112 treffen, welcher das Einfangen dieses Teils des Spektrums des Pumplaserstrahlungsfelds 132 ermöglicht.

Für derartige Pumplichtquellen ist eine mögliche Option, eine dispersives Element, beispielsweise ein Prisma, ein Gitter, eine Linse oder einen geeigneten Glasblock, vorzusehen, welche das spektrale Winkelverhalten aus der obigen Gleichung zur Beschreibung des Verkippungsverhalten der Beschichtung über das Spektrum der Pumplichtquelle hinweg annähern. So ist es mit dem dispersiven Element möglich, die unterschiedlichen Wellenlängen in unterschiedlichen Winkeln zu kollimieren, sodass zumindest theoretisch eine Einkopplung eines nicht monochromatischen Pumplaserstrahlungsfelds 122 in den Festkörper 112 in einem einzigen Schritt ermöglicht wird.

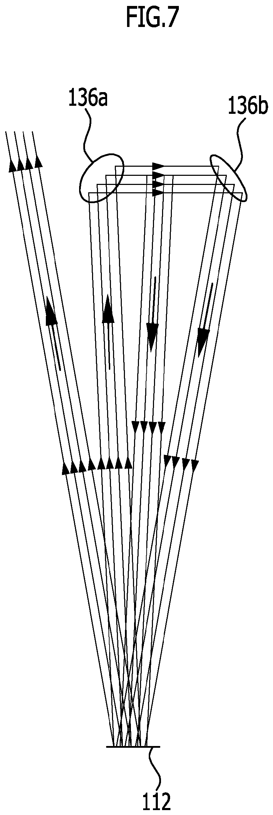

Sollen weitere Umläufe erfolgen, kann beispielsweise das verstärkte Seedlaserstrahlungsfeld 132 über zusätzliche Spiegel 136a und 136b erneut auf den Festkörper 112 umgelenkt werden. Dies ist schematisch in Figur 7 dargestellt.

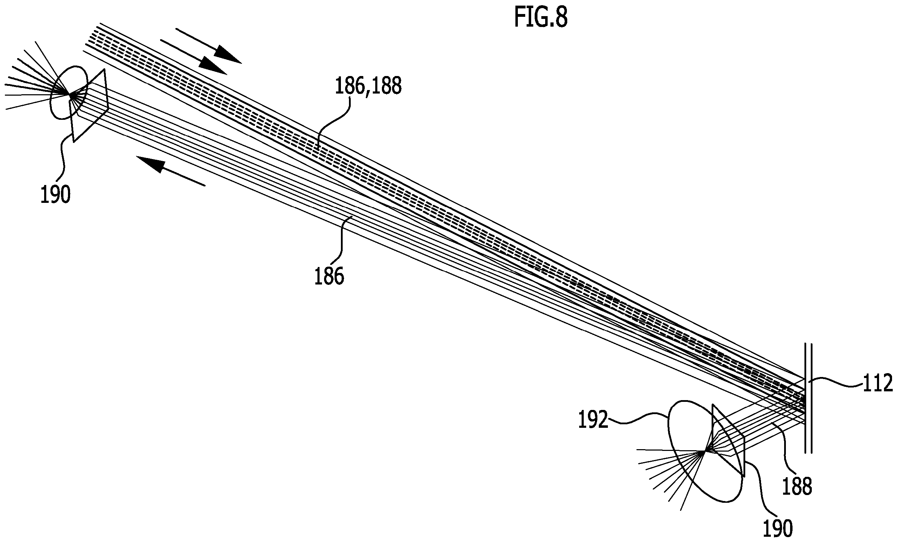

In Figur 8 ist eine Anordnung zur Prüfung einer Anfälligkeit des Systems auf eine Verformung des Festkörpers 112 schematisch dargestellt. Hier wurde beispielhaft eine geringe Krümmung auf der Oberseite 138 und der Unterseite 116 rechnerisch berücksichtigt, um einen defokussierenden Effekt für das Seedlaserstrahlungsfeld 132 zu erzielen. Ein Fokusversatz nach einer idealen Linse wurde als Qualitätskriterium gewertet und mit dem Versatz eines einmalig reflektierten Strahls verglichen. Figur 8 zeigt eine solche sphärische Deformation mit einem Defokus durch Keilwölbung mit einem Radius von r=500 mm. Der in Figur 8 mit dem Bezugszeichen 186 bezeichnete Strahl ergibt sich für eine Wellenlänge von 780 nm mit multiplen Reflexionen. Der in Figur 8 mit dem Bezugszeichen 188 bezeichnete Strahl weist eine Wellenlänge von 700 nm auf und wird an der Oberfläche des Festkörpers einmal reflektiert. Als Rechtecke sind schematisch ideale Linsen mit einer Brennweite f=10 mm eingezeichnet und mit dem Bezugszeichen 190 bezeichnet. Eine Referenzebene 192 zur Defokusbestimmung ist als Kreis eingezeichnet.

Für eine Abschätzung gegenüber einer normalen Reflexion wurde die Änderung der Fokusebene durch das Aufbringen einer Krümmung mit einem Radius r = 500 mm auf dem Festkörper 112 bestimmt. Dabei ergibt sich, dass das verstärkte Seedlaserstrahlungsfeld 132, das durch den Strahl 186 repräsentiert wird, eine Verschiebung von 10 mm auf 10,161 mm zur Folge hat, der reflektierte Strahl 188 hingegen eine Verschiebung von 10 mm auf 10,444 mm. In Brechkraft ausgedrückt bedeutet dies -1,58 Dioptrien für den verstärkten Strahl 186 und -4,25 Dioptrien für den reflektierten Strahl. Je kleiner die Brechkraft ist, umso besser das Ergebnis.

Wird in einem zweiten Schritt die Krümmung des Festkörpers 112 weiter reduziert, also ein Radius von r = 5 m angenommen, um das Phasenverhalten der Strahlen 186 und 188 genauer untersuchen zu können. Alle unproblematischen Abbildungsfehler wurden bei dieser Betrachtung nicht berücksichtigt. Im Ergebnis erhält man einen Astigmatismus in der Größenordnung von etwa 3 Wellenlängen. Ein Phasenfehler des reflektierten Strahls 188 ist geringfügig größer als beim Strahl 186. Trotz der erhöhten Umlaufzahl des verstärkten Strahls 186 ergibt sich ein ähnliches Phasenbild wie für den reflektierten Strahl 188. Dies ermöglicht es, aus Auskopplungen aus Zwischenreflexionen hinreichend Messinformationen für eine adaptive Strahlkorrektur bereitzustellen.

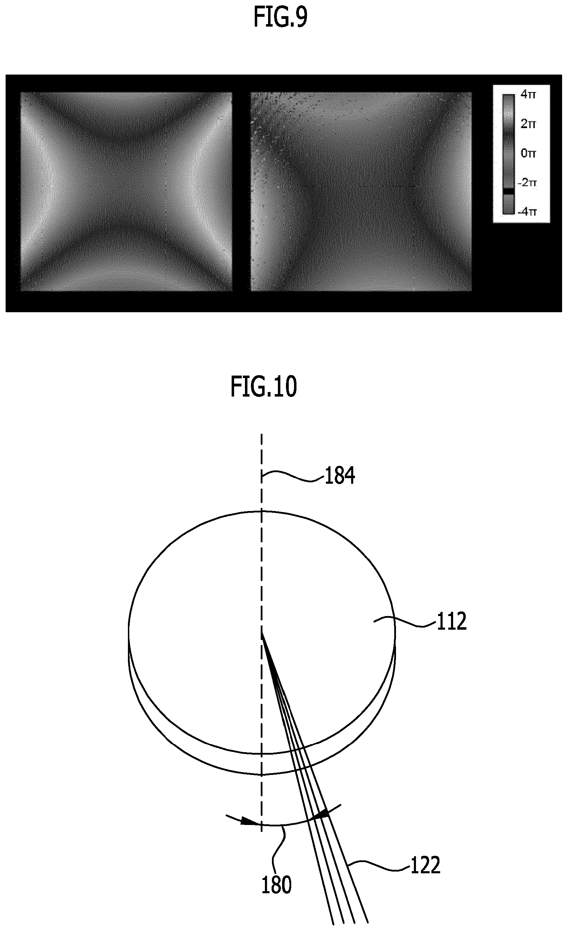

Abbildung 9 zeigt in einer Grauwertdarstellung Phasenfehler höherer Ordnung ohne Verkippung und Defokus in rad. Angenommen ist dabei eine Oberflächenkrümmung mit einem Radius von r = 5 m. Eine Bildfeldbreite beträgt 10 mm. In Figur 9 links ist ein Referenzstrahl 188 mit einer Wellenlänge von 700 nm und einer einzigen Relexion an der Beschichtung 146 dargestellt. Rechts ist das Ergebnis für den Strahl 186mit einer Wellenlänge von 780 nm und multiplen Reflexionen dargestellt.

In den Figuren 10 bis 20 sind mögliche Varianten für die Einkopplung von Pumplaserstrahlungsfeldern 122 und Seedlaserstrahlungsfeldern 132 in einen keilförmigen Festkörper 112, der mit den Beschichtungen 118 und 146 versehen ist, schematisch dargestellt.

Figur 10 zeigt das Auftreffen eines Pumplaserstrahlungsfelds 122 mit mehreren Pumpstrahlen, die unter leicht verkippten Winkeln in den Festkörper 112 eingekoppelt werden. Dieses Vorgehen hat einen Vorteil, denn Pumplichtquellen weisen häufig kein ideales Strahlprofil auf, wodurch Winkelanforderungen der zweiten Beschichtung 146 unterschritten würden. Entlang einer Kegelfläche wird jedoch der erforderliche Einfallswinkel stets eingehalten.

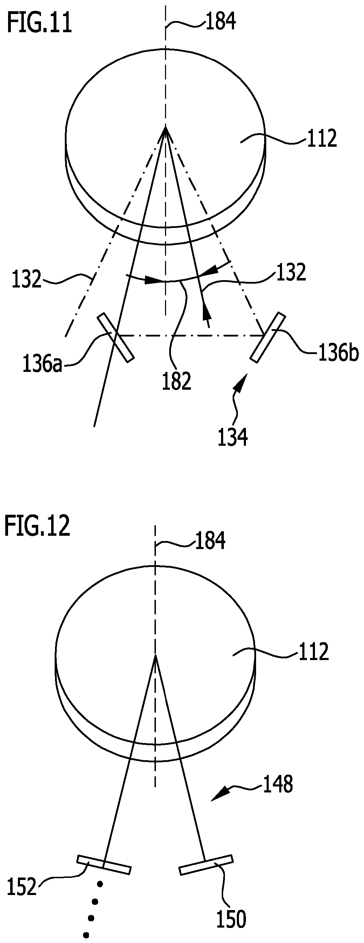

In Figur 11 ist beispielhaft eine Anordnung für ein Seedlaserstrahlungsfeld 132 dargestellt. Es trifft unter einem Seedlaserstrahlungsfeldwinkel 176 und einem Seedlaserstrahlungsfeldrotationswinkel 182 auf den Festkörper 112 auf. Durchgezogen dargestellt ist der Strahlengang für das Seedlaserstrahlungsfeld 132 ohne zweite Umlenkspiegelanordnung 134. Punktiert dargestellt ist der Strahlengang mit einer zwei Umlenkspiegel 136a und 136b umfassenden zweiten Umlenkspiegelanordnung 134. Durch die Umlenkspiegel 136a und 136b wird ein zweiter Durchgang mit einer definierten Zahl an Mehrfachreflexionen durch den Festkörper 112 möglich.

Der beschriebene Effekt eines Mehrfachdurchlaufens des Festkörpers 112 durch Einsatz zweier Beschichtungen 118 und 146 kann auch bei Resonatoren 148 von Lasern genutzt werden. Durch die Vielfachreflexionen im Festkörper 112 wird eine effektive Dicke des verstärkenden Mediums erhöht, sodass weniger Resonatorumläufe notwendig sind, um einen stabilen Laserbetrieb zu ermöglichen.

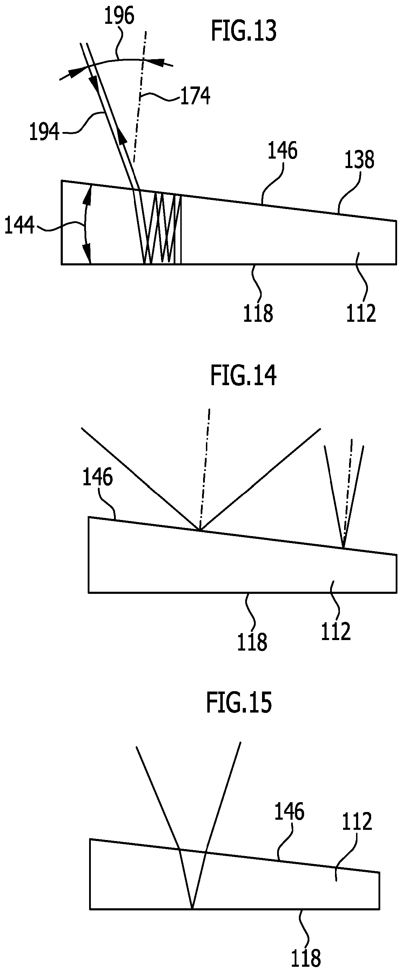

In den Figuren 13 bis 15 ist jeweils ein Festkörper 112 schematisch dargestellt, dessen erste Beschichtung 118 hochreflektierend ausgebildet ist und dessen zweite Beschichtung 146 in Form eines Bandpassfilters ausgebildet ist.

Figur 13 zeigt den Einfall eines Strahlungsfelds 194 unter einem Strahlungsfeldwinkel 196 bezogen auf die Flächennormale 174 der Oberseite 138. Hier ist die Eintrittsbedingung erfüllt. Die Oberseite 138 bildet eine vollflächige Einkoppelöffnung 154 für das Strahlungsfeld 194. Bei diesem kann es sich insbesondere um das Pumplaserstrahlungsfeld 122 oder das Seedlaserstrahlungsfeld 132 handeln. Hier werden, wie oben eingehend dargelegt, mehrere Reflexionen im Festkörper 112 ermöglicht, bevor das Strahlungsfeld 194 wieder aus dem Festkörper 112 austritt.

Figur 14 zeigt schematisch, dass die zweite Beschichtung 146 in Form eines Bandpasses für zu flache und zu steile Strahlungsfeldwinkel 196 hochreflektierend und damit undurchlässig ist. Das Strahlungsfeld 194 kann daher bei nicht angepasstem Strahlungsfeldwinkel 196 nicht in den Festkörper 112 eindringen.

Liegt der Strahlungsfeldwinkel 196, wie schematisch in Figur 15 dargestellt, nicht nahe genug an einer Flanke des Verlaufs der optischen Dichte der zweiten Beschichtung 146, also beispielsweise an den Flanken 160 beziehungsweise 162 oder 168 beziehungsweise 170, kann das Strahlungsfeld 194 nach einer Reflexion an der ersten Beschichtung 118 ungehindert wieder aus dem Festkörper 112 auskoppeln.

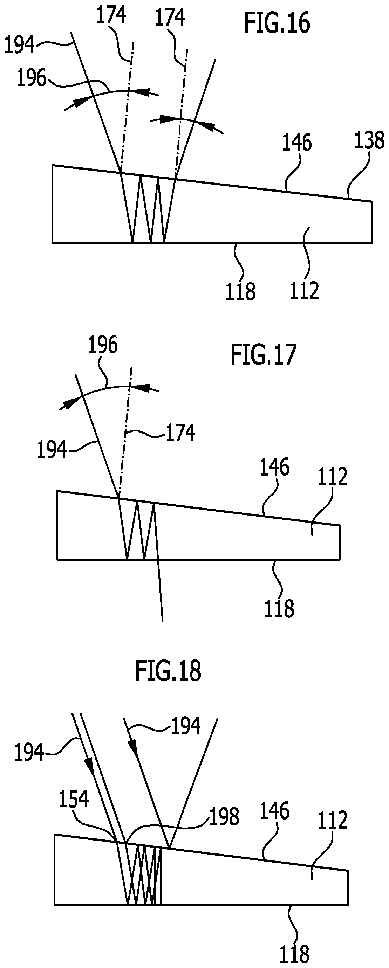

Ist die zweite Beschichtung 146 in Form eines doppelten Bandpasses ausgebildet, kann, wie in Figur 16 schematisch dargestellt, das Strahlungsfeld 194 unter einem flachen Winkel bei einer ansteigenden Flanke einkoppeln und unter einem steilen Winkel bei einer abfallenden Flanke aus dem Festkörper 112 auskoppeln.

Statt einen doppelten Bandpass als Beschichtung 146 vorzusehen, können sowohl die Beschichtung 118 als auch 146 jeweils als einfacher Bandpass ausgebildet sein, wie dies schematisch in Figur 17 dargestellt ist. Eine Einkopplung des Strahlungsfelds 194 in den Festkörper 112 erfolgt dann unter einem Strahlungswinkel 196, welcher größer ist als ein Austrittswinkel des austretenden Strahlungsfelds 194.

Anstelle eine oder mehrere dichroitische Beschichtungen 118 oder 146 vorzusehen, können sowohl die erste Beschichtung 118 als auch die zweite Beschichtung 146 in Form hochreflektierender Beschichtungen ausgebildet sein. Um die Einkopplung des Strahlungsfelds 194 in den Festkörper 112 hinein zu ermöglichen, ist eine Einkoppelöffnung 154 ausgebildet durch einen nicht beschichteten Einkoppel- oder Flächenbereich 198. Nur in diesem Flächenbereich 198 ist die Oberseite 138 für das Strahlungsfeld 194 durchlässig, wie dies beispielhaft in Figur 18 dargestellt ist. Das Einfangen des Strahlungsfelds 194 wird erreicht durch entsprechende Winkelbedingungen, die nach einer Rückreflexion an der ersten Beschichtung 118 dazu führen, dass das Strahlungsfeld 194 außerhalb des Flächenbereichs 198 auf die zweite Beschichtung 146 trifft. Das Strahlungsfeld 194 durchläuft dann nach einer Mehrfachreflexion wieder die Einkoppelöffnung 154. Trifft das Strahlungsfeld 194 neben den Flächenbereich 198 auf die zweite Beschichtung 146 auf, wird es von dieser, wie in Figur 18 schematisch dargestellt, reflektiert, sodass das Strahlungsfeld 194 nicht in den Festkörper 112 eindringen kann.

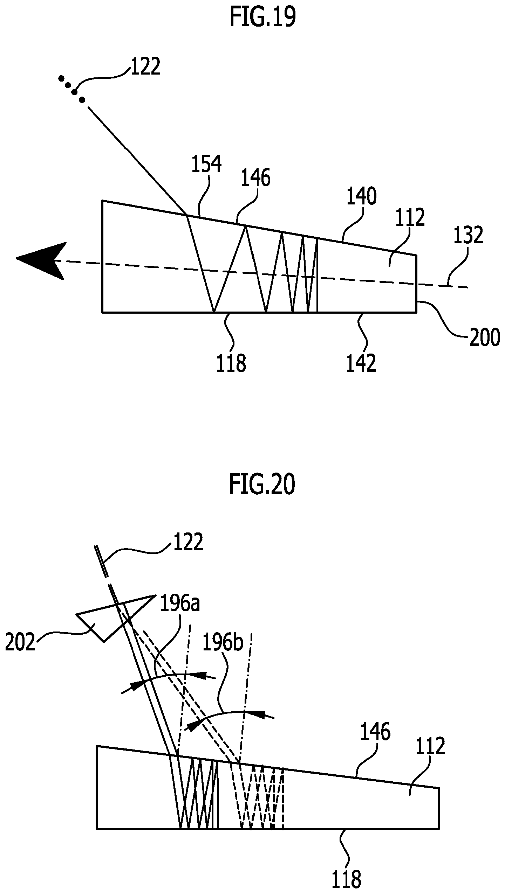

Die vorgeschlagene Ausgestaltung des Festkörpers 112 mit einer hochreflektierenden Beschichtung 118 und einer dichroitischen Beschichtung 146 kann auch derart eingesetzt werden, um das Seedlaserstrahlungsfeld 132, wie schematisch in Figur 19 dargestellt, in einen quaderförmigen Festkörper durch eine Seitenfläche 200 einzukoppeln, die quer, insbesondere senkrecht oder im Wesentlichen senkrecht, zur Oberseitenebene 140 oder zur Unterseitenebene 142 verläuft. Dies entspricht der Vorgehensweise bei einem Slablaser. Das Pumplaserstrahlungsfeld 122 kann dann wie bei der Variante, die in Figur 13 dargestellt ist, durch die zweite Beschichtung 146, die die Einkoppelöffnung 144 wellenlängenselektiv definiert, in den Festkörper 112 eingekoppelt werden.

In Figur 20 ist eine weitere Variante dargestellt, die insbesondere bei nicht monochromatischen und spektral breiten Pumplichtquellen zum Einsatz kommen kann. Hier wird das Pumplaserstrahlungsfeld 122 mit einem dispersiven Element 202 in seine spektralen Anteile zerlegt. Diese treffen unter unterschiedlichen Strahlungsfeldwinkeln 196a und 196b auf den Festkörper 112 auf. Da die Beschichtung 146 einfallswinkel- und wellenlängenabhängig ausgebildet ist, können jedoch beide Spektralanteile des Pumplaserstrahlungsfelds 142 gleichzeitig in den Festkörper 112 einkoppeln und in diesem in der beschriebenen Weise eingefangen werden. Das dispersive Element 202 kann in Form eines Prismas oder eines Gitters ausgebildet sein.

Das dispersive Element 202 kann optional zur Anpassung an ein Spektrum der Pumplichtquelle insbesondere in Form eines Transmissionsgitters direkt auf die Oberseite 138 des Festköpers 112 aufgebracht werden.

Der Neigungswinkel 144 wird vorzugsweise in Abhängigkeit von einem Verlauf der optischen Dichte der Beschichtung 118 beziehungsweise der Beschichtung 146 angegeben. Abhängig vom Einfallswinkel, der spektralen Winkelabhängigkeit, dem effektiven Brechungsindex der Beschichtung und dem Brechungsindex des Substrats kann so der Neigungswinkel 144 für den Festkörper individuell bestimmt und optimiert werden.

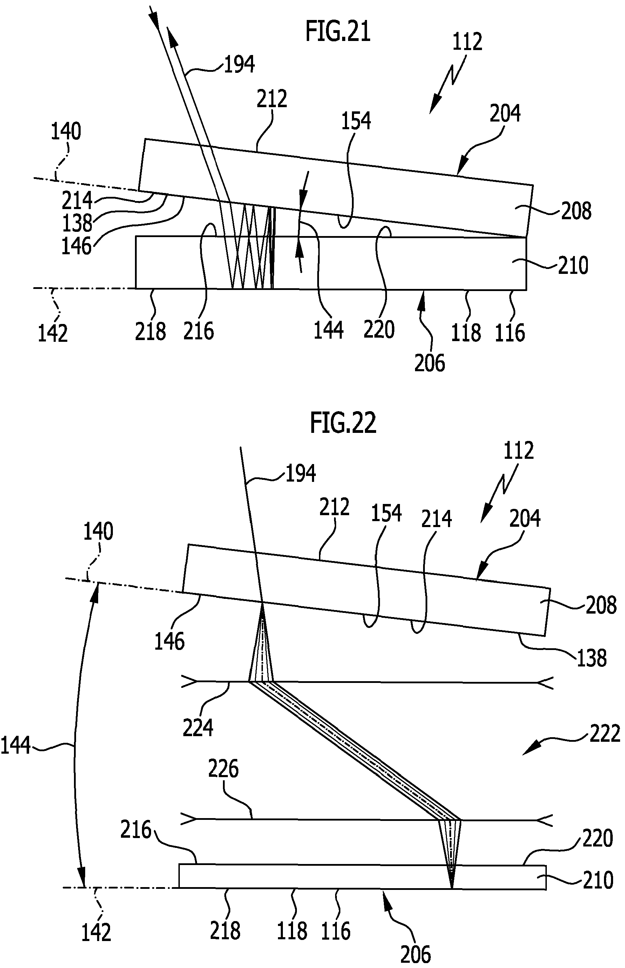

In Figur 21 ist beispielhaft ein weiteres Ausführungsbeispiel eines Festkörpers 112 dargestellt. Der Übersichtlichkeit wegen sind in Figur 21 für einige Komponenten des Festkörpers dieselben Bezugszeichen verwendet wie bei den oben beschriebenen Ausführungsbeispielen einstückig ausgebildeter Festkörpers 112.

Anders als bei den in den Figuren 2 bis 19 dargestellten und oben beschriebenen Festkörpern 112 ist der in Figur 21 dargestellte Festkörper 112 mehrteilig ausgebildet, nämlich zweiteilig. Er umfasst einen ersten Teil 204 und einen zweiten Teil 206. Die Teile 204 und 206 werden nachfolgend auch als erstes Festkörperelement 208 und zweites Festkörperelement 210 bezeichnet.

Die Festkörperelemente 208 und 210 sind scheiben- oder quaderförmig ausgebildet. Das erste Festköperelement 208 weist eine erste Oberseite 212 und erste Unterseite 214 auf. Das zweite Festkörperelement 210 weist eine zweite Oberseite 216 und eine zweite Unterseite 218 auf.

Die erste Oberseite 212 und die erste Unterseite 214 verlaufen parallel zueinander. Die zweite Oberseite 216 und die zweite Unterseite 218 verlaufen ebenfalls parallel zueinander. Dadurch werden planparallel Festkörperelemente 208 und 210 definiert.

Die Festkörperelemente 208 und 210 sind etwas gegeneinander verkippt angeordnet, wobei die erste Unterseite 214 auf die zweite Oberseite 216 hin weist und umgekehrt. Durch diese Anordnung schließen die erste Unterseite 214 und die zweite Oberseite 216 den Neigungswinkel 144 zwischen sich ein.

Die zweite Unterseite 218 des ersten Festkörperelements 208 bildet bei dem in Figur 21 dargestellten zweiteiligen Festkörper 112 die bei den anderen Ausführungsbeispielen definierte Unterseite 116. Die erste Unterseite 114 des zweiten Festkörperelements 210 bildet die Oberseite 138 des Festkörpers 112.

Die Oberseite 138 definiert wiederum die Oberseitenebene 140. Die Unterseite 116 definiert die Unterseitenebene 142. Entsprechend ist auch bei dem in Figur 21 dargestellten Ausführungsbeispiel des Festkörpers 112 die Unterseite 116 mit der ersten reflektierenden Beschichtung 118 versehen und die Oberseite 138 ist mit der zweiten reflektierenden Beschichtung 146 versehen.

Insbesondere kann das zweite Festkörperelement 210 das laseraktive Material enthalten. Das erste Festkörperelement 208 kann beispielsweise aus Glas ausgebildet sein und dient dann im Wesentlichen als Substrat für die zweite reflektierende Beschichtung 146.

Auch bei dem in Figur 21 dargestellten Ausführungsbeispiel des Festkörpers 112 umfassen wahlweise die Oberseite 138 oder/oder die Unterseite 116 mindestens eine optische Einkoppelöffnung zum Einkoppeln eines Seedlaserstrahlungsfelds 132 und/oder eines Pumplaserstrahlungsfelds 122 in den Festkörper 112 hinein zwischen die reflektierenden Beschichtungen 118 und 146. Der Übersichtlichkeit wegen ist in Figur 21 das Strahlungsfeld 194 für die insgesamt drei möglichen Optionen beispielhaft eingezeichnet.

Die beschriebene Ausgestaltung des Festkörpers 112 mit den beiden Festkörperelementen 208 und 210 ermöglicht das Einkoppeln eines Strahlungsfelds 194 durch die optische Einkoppelöffnung 154, die wie bei den oben beschriebenen Ausführungsbeispielen ausgebildet sein kann, beispielsweise durch die besondere Beschichtung 146.

Um das Strahlungsfeld 194 möglichst vollständig in das zweite Festkörperelement 210 einkoppeln zu können, ist es vorteilhaft, wenn die zweite Oberseite 216 mit einer Antireflexionsschicht 220 versehen oder ausgestattet ist, um Hin- und Her-Reflexionen zwischen der ersten Unterseite 214 und der zweiten Oberseite 216 möglichst zu vermeiden.

Die Beschichtungen 118 und 146 können insbesondere wie bei den oben beschriebenen Ausführungsbeispielen von Festkörpern 112 gewählt werden, ebenso der Neigungswinkel 144.

In Figur 22 ist ein weiteres Ausführungsbeispiel eines insgesamt mit dem Bezugszeichen 112 bezeichneten zweiteiligen Festkörpers schematisch dargestellt. Er umfasst wiederum ein erstes Festkörperelement 208 und ein zweites Festkörperelement 210, die in analoger Weise mit Beschichtungen 118 und 146 versehen sind.

Der Übersichtlichkeit wegen sind in Figur 22 dieselben Bezugszeichen verwendet wie bei dem in Figur 21 dargestellten Ausführungsbeispiel des zweiteiligen Festkörpers 112.

Optional kann die zweite Oberseite 216 mit der Antireflexionsschicht 220 versehen sein.

Die gegeneinander geneigten Festkörperelemente 208 und 210 definieren zwischen der Oberseitenebene 140 und der Unterseitenebene 142 wiederum den Neigungswinkel 144.

Im Unterschied zum Festkörper 112, wie er in Figur 21 dargestellt ist, sind bei dem Festkörper 112 in Figur 22 die Festkörperelemente 208 und 210 weiter voneinander beabstandet angeordnet.

Zwischen den Festkörperelementen 208 und 210 ist eine Abbildungseinrichtung 222 angeordnet. Diese kann beispielsweise als 4f-Abbildung ausgebildet sein und als sogenannte Relais-Optik dienen. In Figur 22 ist die Abbildungseinrichtung 222 beispielhaft mit zwei Linsen 224 und 226 dargestellt. Sie kann grundsätzliche auch noch weitere optische Elemente, insbesondere Linsen, umfassen.

Die Abbildungseinrichtung 222 dient insbesondere dazu, den räumlichen Abstand, auch als freier Lichtweg bezeichnet, zwischen der ersten Unterseite 214 und der zweiten Oberseite 216 zu überbrücken. Die Abbildungseinrichtung 222 ist vorzugsweise derart angeordnet und ausgebildet, dass das Strahlungsfeld 194 von der Oberseitenebene 140 auf die Unterseitenebene 142 abgebildet wird.

Die Abbildungseinrichtung 222 ermöglicht insbesondere bei Ausgestaltung in Form einer 4f-Abbildung eine größere nutzbare Fläche des zweiten Festkörperelements 210.

Die Funktionsweise des zweiteiligen Festkörpers 112 entspricht der Funktionsweise der oben beschriebenen Ausführungsbeispiele einstückig ausgebildeter Festkörper 112.

Den Festkörper 112 mehrteilig, insbesondere zweiteilig auszubilden, wie in Verbindung mit den Figuren 21 und 22 beschrieben, hat insbesondere den Vorteil, dass die eingesetzten Komponenten eine geringere geometrische Komplexität aufweisen.

Abschließend sei nochmals betont, dass der Einsatz eines erfindungsgemäßen Festkörpers 112, der eine Einkoppelöffnung 154 aufweist, sowohl für das Pumpen als auch für das Abräumen des laseraktiven Materials geeignet ist. Ob der Festkörper 112 einstückig oder mehrteilig ausgebildet ist, spielt dabei keine Rolle.

Ein besonderer Vorteil der Erfindung liegt insbesondere in einer deutlich verringerten Komplexität des optischen Aufbaus des Laserverstärkungssytems 128, sodass Hochleistungslaserquellen mit deutlich geringerem apparativem und damit einhergehendem Kostenaufwand hergestellt werden können.

Festkörperlaser 110 mit erfindungsgemäßen Festkörpern 112 können insbesondere in der Materialbearbeitung und weiterhin insbesondere beim Laserschneiden, Laserfügen, Lasersintern und Lasergravieren zum Einsatz kommen. Ferner sind sie auch für laserablative Antriebe und zur Weltraumschrottbeseitigung geeignet.

**Bezugszeichenliste**

| | |
|---|---|
| 10 | Festkörperlaser |
| 12 | Festkörper |
| 14 | Kühlanordnung |
| 16 | Unterseite |
| 18 | erste Beschichtung |
| 20 | Pumplaser |
| 22 | Pumplaserstrahlungsfeld |
| 24 | erste Umlenkspiegelanordnung |
| 26a, 26b, 26c | Umlenkspiegel |
| 28 | Laserverstärkungssystem |
| 30 | Seedlaser |
| 32 | Seedlaserstrahlungsfeld |
| 34 | zweite Umlenkspiegelanordnung |
| 36a, 36b, 36c, 36d | Umlenkspiegel |
| 110 | Festkörperlaser |
| 112 | Festkörper |
| 114 | Kühlanordnung |
| 116 | Unterseite |
| 118 | erste Beschichtung |
| 120 | Pumplaser |
| 122 | Pumplaserstrahlungsfeld |
| 124 | erste Umlenkspiegelanordnung |
| 126a | Umlenkspiegel |
| 128 | Laserverstärkungssystem |
| 130 | Seedlaser |
| 132 | Seedlaserstrahlungsfeld |
| 134 | zweite Umlenkspiegelanordnung |
| 136a, 136b | Umlenkspiegel |
| 138 | Oberseite |
| 140 | Oberseitenebene |
| 142 | Unterseitenebene |
| 144 | Neigungswinkel |
| 146 | zweite Beschichtung |
| 148 | Resonator |
| 150 | Endspiegel |
| 152 | Auskoppelspiegel |
| 154 | Einkoppelöffnung |
| 156 | Beschichtung |
| 158 | Bandpassfilter |
| 160 | Flanke |

| | |
|---|---|
| 162 | Flanke |
| 164 | Durchlässigkeitsbereich |
| 166 | Durchlässigkeitsbereich |
| 168 | Flanke |
| 170 | Flanke |
| 172 | Pumplaserstrahlungsfeldwinkel |
| 174 | Flächennormale |
| 176 | Seedlaserstrahlungsfeldwinkel |
| 178 | Flächennormale |
| 180 | Pumplaserstrahlungsfeldrotationswinkel |
| 182 | Seedlaserstrahlungsfeldrotationswinkel |
| 184 | Symmetrieebene |
| 186 | Strahl |
| 188 | Strahl |
| 190 | Linse |
| 192 | Referenzebene |
| 194 | Strahlungsfeld |
| 196a, 196b | Strahlungsfeldwinkel |
| 198 | Flächenbereich |
| 200 | Seitenfläche |
| 202 | dispersives Element |
| 204 | erster Teil |
| 206 | zweiter Teil |
| 208 | erstes Festkörperelement |
| 210 | zweites Festkörperelement |
| 212 | erste Oberseite |
| 214 | erste Unterseite |
| 216 | zweite Oberseite |
| 218 | zweite Unterseite |
| 220 | Antireflexionsschicht |
| 222 | Abbildungseinrichtung |
| 224 | Linse |
| 226 | Linse |

**Patentansprüche**

1. Scheiben- oder quaderförmiger, mindestens ein laseraktives Material enthaltender Festkörper (112) für ein Laserverstärkungssytem (128), welcher Festkörper (112) eine eine Oberseitenebene (140) definierende Oberseite (138) und eine eine Unterseitenebene (142) definierende Unterseite (116) aufweist, wobei die Oberseitenebene (140) und die Unterseitenebene (142) gegeneinander geneigt sind und einen Neigungswinkel (144) einschließen, wobei die Unterseite (116) mit einer ersten reflektierenden Beschichtung (118) versehen ist, und wobei die Oberseite (138) mit einer zweiten reflektierenden Beschichtung (146) versehen ist, wobei die Oberseite (138) und/oder die Unterseite (116) mindestens eine optische Einkoppelöffnung zum Einkoppeln eines Seedlaserstrahlungsfeldes (132) und/oder eines Pumplaserstrahlungsfeldes (122) in den Festkörper (112) zwischen die erste und die zweite reflektierende Beschichtung (118, 146) aufweist und wobei die mindestens eine optische Einkoppelöffnung (154) in Form einer wellenlängenabhängigen und einfallswinkelabhängigen Einkoppelöffnung für ein Pumplaserstrahlungsfeld (122) und/oder Seedlaserstrahlungsfeld (132) ausgebildet ist, wobei die erste reflektierende Beschichtung (118) und/oder die zweite reflektierende Beschichtung (146) die mindestens eine wellenlängenabhängige und einfallswinkelabhängige Einkoppelöffnung (154) definieren/definiert, wobei die erste reflektierende Beschichtung (118) in Form einer hochreflektierenden Beschichtung oder in Form einer wellenlängen- und einfallswinkelabhängigen reflektierenden Beschichtung ausgebildet ist und wobei die zweite reflektierende Beschichtung (146) in Form einer hochreflektierenden Beschichtung oder in Form einer wellenlängen- und einfallswinkelabhängigen reflektierenden Beschichtung (156) ausgebildet ist.

2. Festkörper nach Anspruch 1, wobei er (112) einstückig ausgebildet ist.

3. Festkörper nach Anspruch 1, wobei er (112) zwei- oder mehrteilig ausgebildet ist.

4. Festkörper nach Anspruch 1 oder 3, wobei der Festkörper (112) mindestens ein erstes Festkörperelement (208) und mindestens ein zweites Festkörperelement (210) umfasst.

5. Festkörper nach Anspruch 4, wobei

a) mindestens eines der mindestens zwei Festkörperelemente (208, 210) das laseraktive Material enthält,
und/oder
b) mindestens eines der mindestens zwei Festkörperelemente (208, 210) aus einem für das Seedlaserstrahlungsfeld (132) und/oder das Pumplaserstrahlungsfeld (122) transluzenten Material ausgebildet ist,
und/oder
c) das mindestens eine erste Festkörperelement (208) und das mindestens eine zweite Festkörperelement (210) planparallel ausgebildet sind
und/oder
d) das mindestens eine erste Festkörperelement (208) eine erste Oberseite (212) und eine erste Unterseite (214) aufweist, wobei das mindestens eine zweite Festkörperelement (210) eine zweite Oberseite (216) und eine zweite Unterseite (218) aufweist, wobei die erste Unterseite (214) und die zweite Oberseite (216) aufeinander zu weisend angeordnet oder ausgebildet sind und wobei die erste Unterseite (214) die die Oberseitenebene (140) definierende Oberseite (138) und wobei die zweite Unterseite (218) die die Unterseitenebene (142) definierende Unterseite (116) bilden,
und/oder
e) zwischen dem mindestens einen ersten Festkörperelement (208) und dem mindestens einen zweiten Festkörperelement (210) eine Abbildungseinrichtung (222) angeordnet oder ausgebildet ist.

6. Festkörper nach einem der voranstehenden Ansprüche, wobei

   a) die erste Beschichtung (118) in Form eines einfallswinkelabhängigen Kantenfilters oder eines einfachen oder doppelten Bandpassfilters ausgebildet ist,
   und/oder
   b) die zweite Beschichtung (146) in Form eines einfallswinkelabhängigen Kantenfilters oder eines einfachen oder doppelten Bandpassfilters ausgebildet ist,
   und/oder
   c) die erste und/oder die zweite Beschichtung (118, 146) in Form einer dichroitischen Beschichtung ausgebildet sind.

7. Festkörper nach einem der voranstehenden Ansprüche, wobei

   a) die erste und/oder die zweite Beschichtung (118, 146) polarisationsunabhängig ausgebildet sind
   und/oder
   b) der Neigungswinkel (144) in einem Bereich von etwa 0° bis etwa 3° liegt,
   und/oder
   c) der Festkörper (112) eine Dicke, die einem Abstand zwischen der Oberseite (138) und der Unterseite (116) entspricht, in einem Bereich von etwa 100 $\mu$m bis etwa 1000 $\mu$m aufweist.

8. Festkörper nach einem der voranstehenden Ansprüche, wobei

   a) der Festkörper (112) in Form eines Kristalls oder aus Glas ausgebildet ist,
   und/oder
   b) der Festkörper (112) mit dem laseraktiven Material dotiert ist.

9. Festkörper nach einem der voranstehenden Ansprüche, wobei

   a) das laseraktive Material mindestens ein chemisches Element aus der Gruppe der Lanthanoiden umfasst
   und/oder
   b) der quaderförmige Festkörper (112) eine erste und eine zweite Seitenfläche (200) aufweist und wobei die erste und zweite Seitenfläche (200) quer zur Oberseitenebene (140) und/oder zur Unterseitenebene (142) verlaufen.

10. Laserverstärkungssystem (128) umfassend mindestens einen scheiben- oder quaderförmigen Festkörper (112) nach einem der voranstehenden Ansprüche.

11. Laserverstärkungssystem nach Anspruch 10, wobei

   a) das Laserverstärkungssystem mindestens einen Pumplaser (120) zum Erzeugen eines Pumplaserstrahlungsfeldes (122) umfasst,
   und/oder
   b) das Laserverstärkungssystem einen Seedlaser (130) zum Erzeugen eines Seedlaserstrahlungsfeldes (132) umfasst,
   und/oder
   c) das Pumplaserstrahlungsfeld (122) unter einem Pumplaserstrahlungsfeldwinkel (172) bezogen auf eine Flächennormale (174) der Oberseite (138) oder der Unterseite (116) auf den Festkörper (112) ausgerichtet ist, wobei das Seedlaserstrahlungsfeld (132) unter einem Seedlaserstrahlungsfeldwinkel (176) bezogen auf eine Flächennormale (178) der Oberseite (138) oder der Unterseite (116) auf den Festkörper (112) ausgerichtet ist und wobei sich der Pumplaserstrahlungsfeldwinkel (172) und der Seedlaserstrahlungsfeldwinkel (176) unterscheiden.

12. Laserverstärkungssystem nach Anspruch 10 oder 11, wobei

   a) das Laserverstärkungssystem mindestens einen Pumplaser (120) zum Erzeugen eines Pumplaserstrahlungsfeldes (122) und mindestens eine erste Umlenkspiegelanordnung (124) umfasst zum Umlenken des aus dem Festkörper (112) austretenden Pumplaserstrahlungsfeldes (122) auf den Festkörper zurück
   und/oder
   b) das Laserverstärkungssystem einen Seedlaser (130) zum Erzeugen eines Seedlaserstrahlungsfeldes (132) und mindestens eine zweite Umlenkspiegelanordnung (134) umfasst zum Umlenken des aus dem Festkörper (112) austretenden Seedlaserstrahlungsfeldes (132) auf den Festkörper (112) zurück,
   und/oder
   c) der Festkörper (112) in einem Resonator (148) angeordnet ist.

13. Laserverstärkungssystem nach einem der Ansprüche 10 bis 12, wobei das Laserverstärkungssystem mindestens einen Pumplaser (120) zum Erzeugen eines Pumplaserstrahlungsfeldes (122) und einen Seedlaser (130) zum Erzeugen eines Seedlaserstrahlungsfeldes (132) umfasst und wobei

a) das Laserverstärkungssystem mindestens ein dispersives optisches Element (202) zum wellenlängenabhängigen Aufweiten oder Aufspalten des vom Pumplaser (120) erzeugten Pumplaserstrahlungsfeldes (122) und/oder vom Seedlaser (130) erzeugten Seedlaserstrahlungsfeldes (132) umfasst, und/oder

b) das Pumplaserstrahlungsfeld (122) unter einem von 0° abweichenden Pumplaserstrahlungsfeldrotationswinkel (180) bezogen auf eine zur Oberseitenebene (140) und zur Unterseitenebene (142) senkrecht verlaufende Symmetrieebene (184) des Festkörpers (112) auf den Festkörper (112) gerichtet ist und/oder wobei das Seedlaserstrahlungsfeld (132) unter einem von 0° abweichenden Seedlaserstrahlungsfeldrotationswinkel (182) bezogen auf die Symmetrieebene (184) auf den Festkörper (112) gerichtet ist, und/oder

c) das Pumplaserstrahlungsfeld (122) kollimiert ist.

14. Festkörperlaser (110) umfassend ein Laserverstärkungssystem (128) nach einem der Ansprüche 10 bis 13.

15. Verwendung eines Festkörperlasers (110) nach Anspruch 14 zur Materialbearbeitung, zum Schneiden, Fügen, Sintern und/oder Gravieren, für laserablative Antriebe und zur Weltraumschrottbeseitigung.

**Claims**

1. Discoidal or cuboidal solid body (112) for a laser amplification system (128), which solid body (112) contains at least one laser-active material, has an upper side (138) defining an upper side plane (140) and a lower side (116) defining a lower side plane (142), wherein the upper side plane (140) and the lower side plane (142) are inclined in relation to each other and enclose an angle of inclination (144), wherein the lower side (116) is provided with a first reflective coating (118), and wherein the upper side (138) is provided with a second reflective coating (146), wherein the upper side (138) and/or the lower side (116) has at least one optical input coupling opening for input coupling a seed laser radiation field (132) and/or a pump laser radiation field (122) into the solid body (112) between the first and the second reflective coating (118, 146), and wherein the at least one optical input coupling opening (154) is configured in the form of a wavelength- and angle of incidence-dependent input coupling opening for a pump laser radiation field (122) and/or seed laser radiation field (132), wherein the first reflective coating (118) and/or the second reflective coating (146) define/defines the at least one wavelength-dependent and angle of incidence-dependent input coupling opening (154), wherein the first reflective coating (118) is configured in the form of a highly reflective coating or in the form of a wavelength- and angle of incidence-dependent reflective coating, and wherein the second reflective coating (146) is configured in the form of a highly reflective coating or in the form of a wavelength- and angle of incidence-dependent reflective coating (156).

2. Solid body in accordance with Claim 1, wherein it (112) is integrally formed.

3. Solid body in accordance with Claim 1, wherein it (112) is of two- or multi-part configuration.

4. Solid body in accordance with Claim 1 or 3, wherein the solid body (112) comprises at least one first solid body element (208) and at least one second solid body element (210).

5. Solid body in accordance with Claim 4, wherein

a) at least one of the at least two solid body elements (208, 210) contains the laser-active material, and/or

b) at least one of the at least two solid body elements (208, 210) is formed of a material translucent to the seed laser radiation field (132) and/or the pump laser radiation field (122), and/or

c) the at least one first solid body element (208) and the at least one second solid body element (210) are configured plane-parallel and/or

d) the at least one first solid body element (208) has a first upper side (212) and a first lower side (214), wherein the at least one second solid body element (210) has a second upper side (216) and a second lower side (218), wherein the first lower side (214) and the second upper side (216) are arranged or formed facing each other, and wherein the first lower side (214) forms the upper side (138) defining the upper side plane (140), and wherein the second lower side (218) forms the lower side (116) defining the lower side plane (142), and/or

e) an imaging device (222) is arranged or formed between the at least one first solid body element (208) and the at least one second solid body element (210).

6. Solid body in accordance with one of the preceding Claims, wherein

a) the first coating (118) is configured in the form of an angle of incidence-dependent edge filter or a single or double bandpass filter, and/or

b) the second coating (146) is configured in the form of an angle of incidence-dependent edge filter or a single or double bandpass filter, and/or

c) the first and/or the second coating (118, 146) are configured in the form of a dichroic coating.

7. Solid body in accordance with any one of the preceding Claims, wherein

a) the first and/or the second coating (118, 146) are configured to be polarization-independent and/or

b) the angle of inclination (144) is in a range of about 0° to about 3°, and/or

c) the solid body (112) has a thickness, which corresponds to a distance between the upper side (138) and the lower side (116), in a range of about 100 μm to about 1000 μm.

8. Solid body in accordance with any one of the preceding Claims, wherein

a) the solid body (112) is configured in the form of a crystal or is formed of glass, and/or

b) the solid body (112) is doped with the laser-active material.

9. Solid body in accordance with any one of the preceding Claims, wherein

a) the laser-active material comprises at least one chemical element from the group of lanthanides and/or

b) the cuboidal solid body (112) has a first and a second side face (200), and wherein the first and second side face (200) run transverse to the upper side plane (140) and/or to the lower side plane (142).

10. Laser amplification system (128) comprising at least one discoidal or cuboidal solid body (112) in accordance with any one of the preceding Claims.

11. Laser amplification system in accordance with Claim 10, wherein

a) the laser amplification system comprises at least one pump laser (120) for generating a pump laser radiation field (122), and/or

b) the laser amplification system comprises a seed laser (130) for generating a seed laser radiation field (132), and/or

c) the pump laser radiation field (122) is directed to the solid body (112) at a pump laser radiation field angle (172) in relation to a surface normal (174) of the upper side (138) or the lower side (116), wherein the seed laser radiation field (132) is directed to the solid body (112) at a seed laser radiation field angle (176) in relation to a surface normal (178) of the upper side (138) or the lower side (116), and in wherein the pump laser radiation field angle (172) and the seed laser radiation field angle (176) are different.

12. Laser amplification system in accordance with Claim 10 or 11, wherein

a) the laser amplification system comprises at least one pump laser (120) for generating a pump laser radiation field (122) and at least one first deflection mirror arrangement (124) for deflecting the pump laser radiation field (122) exiting the solid body (112) back to the solid body and/or

b) the laser amplification system comprises a seed laser (130) for generating a seed laser radiation field (132) and at least one second deflection mirror arrangement (134) for deflecting the seed laser radiation field (132) exiting the solid body (112) back to the solid body (112), and/or

c) the solid body (112) is arranged in a resonator (148).

13. Laser amplification system in accordance with any one of Claims 10 to 12, wherein the laser amplification system comprises at least one pump laser (120) for generating a pump laser radiation field (122) and a seed laser (130) for generating a seed laser radiation field (132) and wherein

a) the laser amplification system comprises at least one dispersive optical element (202) for wavelength-dependently expanding or splitting the pump laser radiation field (122) generated by the pump laser (120) and/or the seed laser radiation field (132) generated by the seed laser (130), and/or

b) the pump laser radiation field (122) is directed to the solid body (112) at a pump laser radiation field rotation angle (180) deviating from 0° in relation to a symmetry plane (184) of the solid body (112) running perpendicular to the upper side plane (140) and to the lower side plane (142), and/or wherein the seed laser radiation field (132) is directed to the solid body (112) at a seed laser radiation field rotation angle (182) deviating from 0° in relation to the symmetry plane (184),

and/or

c) the pump laser radiation field (122) is collimated.

14. Solid-state laser (110) comprising a laser amplification system (128) in accordance with any one of Claims 10 to 13.

15. Use of a solid-state laser (110) in accordance with Claim 14 for material processing, for cutting, jointing, sintering, and/or engraving, for laser ablative drives for the removal of space debris.

**Revendications**

1. Corps solide (112), en forme de disque ou de parallélépipède, contenant au moins un matériau actif au laser, pour un système de renforcement de laser (128), ce corps solide (112) comprenant une face supérieure (138) définissant un plan de face supérieure (140) et une face inférieure (116) définissant un plan de face inférieure (142), dans lequel le plan de face supérieure (140) et le plan de face inférieure (142) sont inclinés l'un par rapport à l'autre et forment un angle d'inclinaison (144), dans lequel la face inférieure (116) est munie d'un premier revêtement réfléchissant (118) et dans lequel la face supérieure (138) est munie d'un deuxième revêtement réfléchissant (146), dans lequel la face supérieure (138) et/ou la face inférieure (116) comprend au moins une ouverture de couplage optique pour l'entrée d'un champ de rayonnement de laser d'amorçage (132) et/ou d'un champ de rayonnement de laser de pompage (122) dans le corps solide (112) entre les premier et deuxième revêtements réfléchissants (118, 146) et dans lequel l'au moins une ouverture de couplage optique (154) se présente sous la forme d'une ouverture de couplage dépendant de la longueur d'onde et dépendant de l'angle d'incidence pour un champ de rayonnement laser de pompage (122) et/ou un champ de rayonnement laser d'amorçage (132), dans lequel le premier revêtement réfléchissant (118) et/ou le deuxième revêtement réfléchissant (146) définit l'au moins une ouverture de couplage optique (154) dépendant de la longueur d'onde et dépendant de l'angle d'incidence, dans lequel le premier revêtement réfléchissant (118) se présente sous la forme d'un revêtement hautement réfléchissant ou sous la forme d'un revêtement réfléchissant en fonction de la longueur d'onde et de l'angle d'incidence et dans lequel le deuxième revêtement réfléchissant (146) se présente sous la forme d'un revêtement hautement réfléchissant ou sous la forme d'un revêtement réfléchissant en fonction de la longueur d'onde et de l'angle d'incidence (156).

2. Corps solide selon la revendication 1, dans lequel il (112) est réalisé d'une seule pièce.

3. Corps solide selon la revendication 1, dans lequel il (112) est réalisé à partir de deux ou plusieurs pièces.

4. Corps solide selon la revendication 1 ou 3, dans lequel le corps solide (112) comprend au moins un premier élément de corps solide (208) et au moins un deuxième élément de corps solide (210).

5. Corps solide selon la revendication 4, dans lequel

a) au moins un des au moins deux éléments de corps solide (208, 210) contient le matériau actif au laser,

et/ou

b) au moins un des au moins deux éléments de corps solide (208, 210) est constitué d'un matériau translucide pour le champ de rayonnement laser d'amorçage (132) et/ou le champ de rayonnement laser de pompage (122),

et/ou

c) l'au moins un premier élément de corps solide (208) et l'au moins un deuxième élément de corps solide (210) sont plan-parallèles,

et/ou

d) l'au moins un premier élément de corps solide (208) présente une première face supérieure (212) et une première face inférieure (214), dans lequel l'au moins un deuxième élément de corps solide (210) présente une deuxième face supérieure (216) et une deuxième face inférieure (218), dans lequel la première face inférieure (214) et la deuxième face supérieure (216) sont disposées ou conçues de façon à être orientées l'une vers l'autre et dans lequel la première face inférieure (214) constitué la face supérieure (138) définissant le plan de face supérieure (140) et dans lequel la deuxième face inférieure (218) constitue la face inférieure (116) définissant le plan de face inférieure (142), et/ou

e) entre l'au moins un premier élément de corps solide (208) et l'au moins un deuxième élément de corps solide (210), est disposé ou réalisé un dispositif de représentation (222).

6. Corps solide selon l'une des revendications précédentes, dans lequel

a) le premier revêtement (118) se présente sous la forme d'un filtre de bord dépendant de l'angle d'incidence ou d'un simple ou double filtre passe-bande,
et/ou
b) le deuxième revêtement (146) se présente sous la forme d'un filtre de bord dépendant de l'angle d'incidence ou d'un simple ou double filtre passe-bande,
et/ou
c) le premier et/ou le deuxième revêtement (118, 146) se présentent sous la forme d'un revêtement dichroïque.

7. Corps solide selon l'une des revendications précédentes, dans lequel

a) le premier et/ou le deuxième revêtement (118, 146) sont réalisés de façon à être indépendants de la polarisation
et/ou
b) l'angle d'inclinaison (144) est dans un intervalle d'environ 0° à environ 3°,
et/ou
c) le corps solide (112) présente une épaisseur, qui correspond à une distance entre la face supérieure (138) et la face inférieure (116), dans un intervalle d'environ 100 $\mu$m à environ 1 000 $\mu$m.

8. Corps solide selon l'une des revendications précédentes, dans lequel

a) le corps solide (112) se présente sous la forme d'un cristal ou est constitué de verre,
et/ou
b) le corps solide (112) est dopé avec le matériau actif au laser.

9. Corps solide selon l'une des revendications précédentes, dans lequel

a) le matériau actif au laser comprend au moins un élément chimique de groupe des lanthanides,
et/ou
b) le corps solide parallélépipédique (112) présente une première et une deuxième surface latérale (200) et dans lequel la première et la deuxième surface latérale (200) s'étendent transversalement par rapport au plan de face supérieure (140) et/ou au plan de face inférieure (142).

10. Système de renforcement laser (128) comprenant au moins un corps solide (112) en forme de disque ou de parallélépipède selon l'une des revendications précédentes.

11. Corps solide selon la revendication 10, dans lequel

a) le système de renforcement laser comprend au moins un laser de pompage (120) pour la production d'un champ de rayonnement laser de pompage (122),
et/ou
b) le système de renforcement laser comprend au moins un laser d'amorçage (130) pour la production d'un champ de rayonnement laser d'amorçage (132),
et/ou
c) le champ de rayonnement laser de pompage (122) est orienté avec un angle de champ de rayonnement laser de pompage (172) par rapport à une normale de surface (174) de la face supérieure (138) ou de la face inférieure (116) vers le corps solide (112), dans lequel le champ de rayonnement laser d'amorçage (132) est orienté avec un angle de champ de rayonnement laser d'amorçage (176) par rapport à une normale de surface (178) de la face supérieure (138) ou de la face inférieure (116) vers le corps solide (112) et dans lequel l'angle de champ de rayonnement laser de pompage (172) et l'angle de champ de rayonnement laser d'amorçage (176) sont différents.

12. Système de renforcement laser selon la revendication 10 ou 11, dans lequel

a) le système de renforcement laser comprend au moins un laser de pompage (120) pour la production d'un champ de rayonnement laser de pompage (122) et au moins un premier dispositif à miroirs de déviation (124) pour la déviation du champ de rayonnement laser de pompage (122) sortant du corps solide (112) à nouveau vers le corps solide,
et/ou
b) le système de renforcement laser comprend un laser d'amorçage (130) pour la production d'un champ de rayonnement laser d'amorçage (132) et au moins un deuxième dispositif à miroirs de déviation (134) pour la déviation du champ de rayonnement laser d'amorçage (132) sortant du corps solide (112) à nouveau vers le corps solide (112),
et/ou
c) le corps solide (112) est disposé dans un résonateur (148).

13. Système de renforcement laser selon l'une des revendications 10 à 12, dans lequel le système de renforcement laser comprend au moins un laser de pompage (120) pour la production d'un champ de rayonnement laser de pompage (122) et un laser d'amorçage (130) pour la production d'un champ de rayonnement laser d'amorçage (132) et dans lequel

a) le système de renforcement laser comprend au moins un élément optique dispersif (202) pour l'élargissement en fonction de la longueur d'onde ou la division du champ de rayonnement laser de pompage (122) produit par le laser de pompage (120) et/ou du champ de rayonnement laser d'amorçage (132) produit par le laser d'amorçage (130),
et/ou
b) le champ de rayonnement laser de pompage (122) est orienté vers le corps solide (112) avec un angle de rotation de champ de rayonnement laser de pompage (180) différent de 0° par rapport à un plan de symétrie (184), s'étendant perpendiculairement par rapport au plan de face supérieure (140) et au plan de face inférieure (142), du corps solide (112) et/ou dans lequel le champ de rayonnement laser d'amorçage (132) est orienté vers le corps solide (112) avec un angle de rotation de champ de rayonnement laser d'amorçage (182) différent de 0° par rapport au plan de symétrie (184),
et/ou
c) le champ de rayonnement laser de pompage (122) est collimate.

14. Laser à corps solide (110) comprenant un système de renforcement laser (128) selon l'une des revendications 10 à 13.

15. Utilisation d'un laser à corps solide (110) selon la revendication 14 pour l'usinage d'un matériau, pour la découpe, l'assemblage, le frittage et/ou la gravure, pour des propulsions par ablation laser et pour l'élimination des débris dans l'espace.

FIG.1 (Stand der Technik)

EP 3 455 910 B1

FIG.2

EP 3 455 910 B1

## FIG.3

FIG.4

# FIG.5

132

112

# FIG.6

# FIG.7

FIG.8

EP 3 455 910 B1

# FIG.9

# FIG.10

FIG.11

FIG.12

FIG.13

196

174

194

146   138

144

118   112

FIG.14

146

118   112

FIG.15

146   112

118

FIG.16

FIG.17

FIG.18

FIG.19

FIG.20

## FIG.21

## FIG.22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4344227 A1
- DE 19835107 A1
- US 20020057725 A1
- US 20060114961 A1
- US 20060193362 A1
- US 8514906 B1
- US 5553088 A